# EUROPÄISCHE PATENTSCHRIFT

(11) **EP 1 281 475 B1**
(45) Veröffentlichungstag und Bekanntmachung des Hinweises auf die Patenterteilung: **12.09.2007**
(21) Anmeldenummer: 02012226.3
(22) Anmeldetag: 04.06.2002
(51) Int. Cl.: B23Q 39/04, B23Q 39/02

(54) **Drehmaschine mit zwei Arbeitsspindeln für Werkstücke und zwei Werkzeugträgern**
Machine tool with two workpiece spindles and two tool carriers
Machine-outil avec deux broches pour pièces de travail et deux supports d'outils

(30) Priorität: 22.06.2001 DE 10130760
(43) Veröffentlichungstag der Anmeldung: 05.02.2003
(73) Patentinhaber: Traub Drehmaschinen GmbH & Co. KG, 73262 Reichenbach (DE)
(72) Erfinder: Baumann, Ulrich, 73252 Lenningen (DE)
(74) Vertreter: Hoeger, Stellrecht & Partner Patentanwälte

(56) Entgegenhaltungen:
- EP-A- 0 999 002
- WO-A-02/24385
- WO-A-02/24386

## Beschreibung

Die Erfindung betrifft eine Drehmaschine, umfassend ein Maschinengestell, eine am Maschinengestell gehaltene erste und um eine erste Spindelachse drehbare Arbeitsspindel mit einer ersten Aufnahme für ein erstes Werkstück, mindestens einen ersten Werkzeugträger, welcher zur Bearbeitung des ersten Werkstücks in einer X-Richtung quer zur ersten Spindelachse bewegbar ist, eine zweite und um eine zweite Spindelachse drehbare Arbeitsspindel, welche eine zweite Werkstückaufnahme für ein zweites Werkstück aufweist und welche gegenüber der ersten Arbeitsspindel in einer quer zur X-Richtung und quer zur ersten Spindelachse verlaufenden Querrichtung von einer mit der zweiten Spindelachse zur ersten Spindelachse koaxialen Stellung in eine nicht koaxiale Stellung bringbar ist, in welcher die erste und die zweite Spindelachse im Abstand voneinander angeordnet sind, und einen einem ersten Arbeitsraum zugeordneten ersten frontseitigen Werkzeugträger zur Bearbeitung des ersten Werkstücks, der durch eine Bewegung quer zur X-Richtung mit mindestens einem Werkzeug von einer inaktiven in eine aktive Stellung und umgekehrt bewegbar ist, sowie einen einem zweiten Arbeitsraum zugeordneten zweiten frontseitigen Werkzeugträger zur Bearbeitung des zweiten Werkstücks, der in der Querrichtung gegenüber dem ersten Arbeitsraum versetzt angeordnet ist, (siehe z.B. EP-A-0 999 002).

Derartige Drehmaschinen sind aus dem Stand der Technik, beispielsweise der deutschen Patentanmeldung 196 21 406, bekannt, wobei bei dieser bekannten Lösung der erste frontseitige Werkzeugträger und die zweite Arbeitsspindel gemeinsam in der Querrichtung bewegbar sind.

Damit ist es erforderlich, die Bearbeitung des ersten Werkstücks mit den im ersten frontseitigen Werkzeugträger angeordneten Werkzeugen und die Bearbeitung des zweiten Werkstücks mit den am zweiten frontseitigen Werkzeugträger angeordneten Werkzeugen exakt aufeinander abzustimmen.

Der Erfindung liegt daher die Aufgabe zugrunde, eine Drehmaschine der eingangs beschriebenen Art derart zu gestalten, daß möglichst flexible Bearbeitungen des ersten Werkstücks und des zweiten Werkstücks möglich sind.

Diese Aufgabe wird bei einer Drehmaschine der eingangs beschriebenen Art erfindungsgemäß dadurch gelöst, daß der erste frontseitige Werkzeugträger und die zweite Arbeitsspindel in der Querrichtung durch die Maschinensteuerung gesteuert relativ zueinander bewegbar sind. So sind die Bewegungen der zweiten Arbeitsspindel und des ersten frontseitigen Werkzeugträgers unabhängig voneinander realisierbar.

Dadurch besteht die Möglichkeit, das erste Werkstück und das zweite Werkstück gleichzeitig zu bearbeiten, wobei die Bearbeitungen voneinander entkoppelt ausgeführt werden können.

Unter einem frontseitigen Werkzeugträger ist im Rahmen dieser Anmeldung ein Werkzeugträger zu verstehen, der an eine Frontseite eines Arbeitsraums, insbesondere der Arbeitsspindel gegenüberliegend, angeordnet ist. Dieser frontseitige Werkzeugträger kann dabei Werkzeuge tragen, mit denen eine Frontseite des Werkstücks bearbeitbar ist, aber auch Werkzeuge zur umfangsseitigen Bearbeitung zumindest nahe der Frontseite des Werkstücks.

Die relative Bewegbarkeit der zweiten Arbeitsspindel und des ersten frontseitigen Werkzeugträgers können in unterschiedlichster Art und Weise realisiert werden. So wäre es beispielsweise denkbar, beide auf einem gemeinsamen Schlitten in Querrichtung zu bewegen und auf diesem gemeinsamen Querschlitten noch einen zusätzlichen Querschlitten für die Bewegung entweder der zweiten Arbeitsspindel oder des ersten frontseitigen Werkzeugträgers in der Querrichtung vorzusehen.

Aus Gründen der Steifigkeit der Konstruktion und der Einfachheit der Steuerung ist es jedoch besonders günstig, wenn der erste frontseitige Werkzeugträger und die zweite Arbeitsspindel jeweils auf einem in der Querrichtung bewegbaren Querschlitten sitzen.

Prinzipiell könnte dabei der erste frontseitige Werkzeugträger direkt gegenüber dem Maschinengestell mit dem Querschlitten verfahrbar sein und unabhängig davon auch die zweite Arbeitsspindel mit dem Querschlitten am Maschinengestell verfahrbar angeordnet sein.

Eine konstruktiv aufgrund des Raumbedarfs besonders günstige Lösung sieht dabei vor, daß der erste frontseitige Werkzeugträger auf derselben Konsole sitzt, wie die zweite Arbeitsspindel mit ihrem Querschlitten, so daß über die Konsole dann die Lagerung beider relativ zum Maschinengestell erfolgt.

Damit besteht beispielsweise die Möglichkeit, für den Querschlitten des ersten frontseitigen Werkzeugträgers und den Querschlitten der zweiten Arbeitsspindel gemeinsame Führungen vorzusehen, auf denen beide in der Querrichtung geführt sind.

Um bei der Bearbeitung des ersten Werkstücks mit dem ersten frontseitigen Werkzeugträger eine zusätzliche Bewegungsachse zur Verfügung zu haben, hat es sich als günstig erwiesen, wenn der erste frontseitige Werkzeugträger und die zweite Arbeitsspindel auf einem gemeinsamen, in X-Richtung gegenüber dem Maschinengestell bewegbaren Schlitten sitzen. Ein derartiger Schlitten kann beispielsweise durch die Konsole gebildet sein.

Dieser Schlitten bietet die Möglichkeit, einerseits die Werkzeuge des ersten frontseitigen Werkzeugträgers nicht nur in Querrichtung zu bewegen, sondern auch in der X-Richtung, andererseits eröffnet diese Lösung eine einfache Möglichkeit, die zweite Arbeitsspindel koaxial zur ersten Arbeitsspindel zur Übergabe des ersten bearbeiteten Werkstücks in die zweite Arbeitsspindel zu positionieren.

Hinsichtlich der Bewegbarkeit des zweiten frontseitigen Werkzeugträgers relativ zur zweiten Spindelachse wurden bislang keine näheren Angaben gemacht.

Prinzipiell ist es ausreichend, die Bewegbarkeit der zweiten Arbeitsspindel in der Querrichtung auszunutzen, um das zweite Werkstück relativ zu dem Werkzeug des zweiten frontseitigen Werkzeugträgers zu positionieren.

Ist beispielsweise der zweite frontseitige Werkzeugträger mit einer in der Querrichtung verlaufenden Reihe von Werkzeugen versehen, so können durch Verfahren in der Querrichtung auch unterschiedliche Werkzeuge angefahren werden und durch die Relativposition der zweiten Spindelachse gegenüber dem jeweiligen Werkzeug in der Querrichtung auch Bearbeitungen in unterschiedlichem radialem Abstand von der zweiten Spindelachse vorgenommen werden.

Um jedoch die Baugröße der Drehmaschine in der Querrichtung nicht überhand nehmen zu lassen und somit auch die Steifigkeit der Konstruktion bei der Bearbeitung des zweiten Werkstücks möglichst groß zu halten, ist vorzugsweise vorgesehen, daß der zweite frontseitige Werkzeugträger quer zur zweiten Spindelachse und in einer quer zur Querrichtung verlaufenden Richtung bewegbar ist.

Damit besteht die Möglichkeit, einerseits durch das Verfahren der zweiten Arbeitsspindel in der Querrichtung das zweite Werkstück relativ zu den jeweiligen Werkzeugen des zweiten frontseitigen Werkzeugträgers zu positionieren, gleichzeitig aber auch die Möglichkeit, durch Bewegen des zweiten frontseitigen Werkzeugträgers quer zur Querrichtung, von einem Werkzeug desselben auf das andere Werkzeug zu wechseln und gleichzeitig noch zwei Achsen, nämlich konventionell gesprochen eine X- und eine Y-Achse, zur Bearbeitung des zweiten Werkstücks mit jedem einzelnen Werkzeug des zweiten frontseitigen Werkzeugträgers zur Verfügung zu haben.

Vorzugsweise ist dabei der zweite frontseitige Werkzeugträger ungefähr in X-Richtung bewegbar.

Um einerseits eine möglichst steife Konstruktion zu erhalten und um andererseits den Aufwand zur Steuerung der Bearbeitung des zweiten Werkstücks möglichst gering zu halten, ist vorzugsweise vorgesehen, daß der zweite frontseitige Werkzeugträger an der den Querschlitten für die zweite Arbeitsspindel tragenden Konsole bewegbar geführt ist, so daß die Bewegung des zweiten Werkzeugträgers relativ zu dem den Querschlitten der zweiten Arbeitsspindel tragenden Teil erfolgt und somit keine zusätzlichen Positionsungenauigkeiten die Präzision bei der Bearbeitung des zweiten Werkstücks beeinflussen.

Hinsichtlich der Bewegbarkeit der zweiten Arbeitsspindel wurden bislang keine näheren Angaben gemacht.

So wäre es beispielsweise denkbar, die Übergabe des ersten Werkstücks in die zweite Arbeitsspindel durch die Z-Verschiebbarkeit des ersten Werkstücks aufgrund der Verschiebbarkeit der ersten Arbeitsspindel zu realisieren und die Bearbeitung des zweiten Werkstücks durch eine entsprechende Z-Verschiebbarkeit des zweiten frontseitigen Werkzeugträgers zu realisieren.

Als besonders günstig hat es sich jedoch erwiesen, wenn die zweite Arbeitsspindel in Richtung der zweiten Spindelachse verschiebbar ist.

Vorzugsweise ist hierzu die zweite Arbeitsspindel auf einem Z-Schlitten angeordnet, welcher seinerseits auf dem Querschlitten sitzt.

Damit besteht einerseits die Möglichkeit, in einfacher Weise die Übergabe des ersten Werkstücks in die Arbeitsspindel durch Verschieben derselben zu realisieren, und andererseits die Möglichkeit, die Z-Achsbewegung für die Bearbeitung des zweiten Werkstücks mit den Werkzeugen des zweiten frontseitigen Werkzeugträgers durch Verschieben der Arbeitsspindel zu realisieren.

Um darüber hinaus komplexere Bearbeitungen durchführen zu können, hat es sich als günstig erwiesen, wenn die zweite Arbeitsspindel um eine quer zur zweiten Spindelachse verlaufende Schwenkachse schwenkbar ist.

Diese Schwenkachse könnte prinzipiell in unterschiedlichen Richtungen quer zur zweiten Spindelachse verlaufen. Eine konstruktiv besonders günstige Lösung sieht jedoch vor, daß die Schwenkachse quer zur X-Richtung verläuft.

Besonders günstig ist es, wenn die Schwenkachse ungefähr parallel zur Querrichtung verläuft, so daß durch Verschwenken der zweiten Arbeitsspindel kein Versatz derselben in Querrichtung erfolgt.

Hinsichtlich der Ausbildung des ersten frontseitigen Werkzeugträgers wurden bislang keine näheren Angaben gemacht. Beispielsweise wäre es denkbar, die Werkzeuge des ersten frontseitigen Werkzeugträgers dadurch in Einsatz zu bringen, daß das erste Werkstück durch die Verschiebbarkeit der ersten Arbeitsspindel in Z-Richtung in Richtung der Werkzeuge des ersten frontseitigen Werkzeugträgers bewegt wird, um die erforderliche Z-Achsbewegung zu realisieren.

Als besonders günstig hat es sich erwiesen, wenn der erste frontseitige Werkzeugträger in Richtung parallel zur ersten Spindelachse bewegbar ist.

Damit ist es lediglich notwendig, die Bewegbarkeit des ersten Werkstücks in Z-Richtung mittels der ersten Arbeitsspindel für die Relativpositionierung der Werkzeuge des ersten Werkzeugträgers relativ zum ersten Werkstück in Z-Richtung einzusetzen und unabhängig davon die Werkzeuge des ersten frontseitigen Werkzeugträgers zur Bearbeitung am ersten Werkstück einzusetzen, wobei bei der Z-Achspositionierung des ersten frontseitigen Werkzeugträgers dann die Z-Achspositionen des ersten Werkstücks, bedingt durch die Verschiebung der ersten Arbeitsspindel rechnerisch berücksichtigt werden müssen. Damit besteht jedoch die Möglichkeit, mit den Werkzeugen des ersten frontseitigen Werkzeugträgers unabhängig von den Werkzeugen des ersten Werkzeugträgers zu bearbeiten.

Besonders günstig ist es dabei, wenn der erste frontseitige Werkzeugträger und die zweite Arbeitsspindel in Richtung der Spindelachsen unabhängig voneinander bewegbar sind, so daß bei einer Bearbeitung des ersten und des zweiten Werkstücks die Werkzeuge des ersten frontseitigen Werkzeugträgers und die Werkzeuge des zweiten frontseitigen Werkzeugträgers unabhängig voneinander eingesetzt werden können.

Konstruktiv läßt sich die Bewegbarkeit des ersten frontseitigen Werkzeugträgers in Z-Richtung besonders günstig dadurch realisieren, daß dieser auf einem in Z-Richtung bewegbaren Z-Schlitten sitzt, welcher seinerseits auf dem Querschlitten für den ersten frontseitigen Werkzeugträger sitzt.

Hinsichtlich der Anordnung der Werkzeuge an dem ersten frontseitigen Werkzeugträger wurden bislang keine näheren Angaben gemacht.

Beispielsweise wäre es denkbar, ein einzelnes Werkzeug am ersten frontseitigen Werkzeugträger vorzusehen.

Aus Gründen eines möglichst optimalen Werkzeugeinsatzes für komplexe Bearbeitungen ist es besonders günstig, wenn der erste frontseitige Werkzeugträger eine Reihe von in einer Längsrichtung aufeinanderfolgend angeordneten Werkzeugen aufweist.

Die Längsrichtung einer derartigen Reihe kann unterschiedlich verlaufen. Ein besonders vorteilhaftes Ausführungsbeispiel sieht vor, daß die Längsrichtung ungefähr parallel zur Querrichtung verläuft, so daß durch Bewegen des ersten frontseitigen Werkzeugträgers in der Querrichtung gleichzeitig unterschiedliche Werkzeuge desselben in Einsatz gebracht werden können.

Darüber hinaus läßt sich die Zahl der Werkzeuge noch dadurch vervielfachen, daß der erste frontseitige Werkzeugträger mindestens zwei um eine Schwenkachse im Winkelabstand zueinander angeordnete Werkzeuge aufweist, welche durch Verschwenken des Werkzeugträgers um die Schwenkachse in eine aktive oder inaktive Stellung bringbar sind.

Dadurch ist es besonders vorteilhaft, auch beispielsweise die Zahl der in Einsatz bringbaren Reihen von Werkzeugen zu vervielfachen, nämlich dadurch, daß die Schwenkachse parallel zu den jeweiligen Reihen verläuft, so daß durch Schwenken um die Schwenkachse jeweils unterschiedliche Reihen in einer aktiven Stellung stehen.

Hinsichtlich der Ausrichtung der Schwenkachse relativ zu den übrigen Achsen der Drehmaschine hat es sich als besonders günstig erwiesen, wenn die Schwenkachse ungefähr parallel zur Querrichtung verläuft.

Um die Schwenkachse noch zusätzlich zu komplexen Bearbeitungen einsetzen zu können, ist vorzugsweise vorgesehen, daß die Schwenkachse als durch die Maschinensteuerung steuerbare B-Achse ausgebildet ist, so daß die Schwenkachse nicht nur dazu eingesetzt werden kann, die mehreren Werkzeuge in aktive oder inaktive Stellungen zu bringen, sondern auch dazu, die Werkzeuge in gegenüber der ersten Spindelachse geneigte, beispielsweise in einem spitzen Winkel verlaufende Stellungen zu bringen.

Hinsichtlich der Anordnung der Werkzeuge an dem zweiten frontseitigen Werkzeugträger wurden bislang ebenfalls keine näheren Angaben gemacht. Beispielsweise wäre im einfachsten Fall die Anordnung eines einzelnen Werkzeugs am zweiten frontseitigen Werkzeugträger möglich. Um komplexere Bearbeitungen durchführen zu können, hat es sich als vorteilhaft erwiesen, wenn der zweite frontseitige Werkzeugträger eine Reihe von in einer Längsrichtung aufeinanderfolgend angeordneten Werkzeugen aufweist.

Vorzugsweise kann die Längsrichtung ebenfalls unterschiedlich verlaufen. Als besonders günstig hat es sich jedoch erwiesen, wenn die Längsrichtung ungefähr parallel zur Bewegungsrichtung des zweiten frontseitigen Werkzeugträgers verläuft. Alternativ oder ergänzend zur Anordnung der Werkzeuge in Reihe ist vorzugsweise vorgesehen, daß der zweite frontseitige Werkzeugträger mindestens zwei im Winkelabstand um eine Schwenkachse angeordnete Werkzeuge aufweist, die durch ein Schwenken des zweiten Werkzeugträgers um die Schwenkachse von einer aktiven in eine inaktive Stellung und umgekehrt bewegbar sind.

Insbesondere bei den Ausführungsbeispielen, bei denen die Werkzeugträger in einer Reihe angeordnet sind, ist vorzugsweise vorgesehen, daß die Schwenkachse parallel zu den Reihen verläuft, so daß durch Schwenken um die Schwenkachse unterschiedliche Reihen von Werkzeugen des zweiten frontseitigen Werkzeugträgers zum Einsatz bringbar sind.

Besonders zweckmäßig ist es dabei, wenn die Schwenkachse ungefähr parallel zur Bewegungsrichtung des zweiten frontseitigen Werkzeugträgers verläuft, so daß durch Schwenken der Werkzeuge um die Schwenkachse keine Verlagerung in Richtung der Bewegungsrichtung erfolgt.

Um zusätzlich zum Einsatz unterschiedlicher Werkzeuge auch noch komplexere Bearbeitungen vornehmen zu können, ist vorzugsweise vorgesehen, daß die Schwenkachse für den zweiten frontseitigen Werkzeugträger als durch die Maschinensteuerung steuerbare B-Achse ausgebildet ist, so daß auch noch eine komplette B-Achsenfunktionalität bei dem Verschwenken der Werkzeuge des zweiten frontseitigen Werkzeugträgers realisierbar ist und somit diese Werkzeuge beispielsweise in definierten spitzen Winkeln relativ zur zweiten Spindelachse ausrichtbar sind.

Hinsichtlich der Anordnung der Werkzeuge relativ zu den Schwenkachsen bei den frontseitigen Werkzeugträgern wurden im Zusammenhang mit der bisherigen Erläuterung der einzelnen Ausführungsbeispiele der vorliegenden Erfindung keine näheren Angaben gemacht. Prinzipiell ist es denkbar, die Werkzeuge so anzuordnen, daß die bei der Zerspanung auftretende Kraftrichtung seitlich der Schwenkachsen verläuft, wie dies bei den üblicherweise in Drehmaschinen vorgesehenen Werkzeugträgern mit B-Achse der Fall ist.

Besonders günstig ist es jedoch, wenn die Werkzeuge relativ zu der Schwenkachse so angeordnet sind, daß die beim Zerspanen auf die Werkzeuge wirkende Kraft im wesentlichen in radialer Richtung zur Schwenkachse gerichtet ist, so daß die beim Zerspanen auftretende Kraft ein vernachlässigbares oder zumindest geringes Drehmoment in Richtung der Schwenkachse erzeugt und somit der Schwenkantrieb für die frontseitigen Werkzeugträger keinen großen Momenten Stand halten muß, wodurch bei einfachem mechanischem Aufbau eine ausreichend hohe Steifigkeit erreichbar ist.

Die erfindungsgemäße Drehmaschine kann bei der Bearbeitung des ersten Werkstücks in unterschiedlichster Weise ausgebildet sein.

Beispielsweise wäre es denkbar, die Drehmaschine als sogenannten Kurzdreher auszubilden und dabei das erste Werkstück ausschließlich durch die erste Arbeitsspindel zu führen.

Vorzugsweise ist dabei vorgesehen, daß die erste Arbeitsspindel in Richtung der ersten Spindelachse verfahrbar am Maschinengestell geführt ist, das heißt in Z-Richtung bewegbar ist, so daß eine vollständige Bearbeitung des Werkstücks durch eine Verfahrbarkeit des ersten Werkzeugträgers in X-Richtung möglich ist.

Es ist aber auch denkbar, den ersten Werkzeugträger noch zusätzlich in Y-Richtung quer zur ersten Spindelachse verfahrbar zu gestalten.

Bei einer anderen bevorzugten Ausführungsform der erfindungsgemäßen Lösung ist vorzugsweise vorgesehen, daß die Führung des ersten Werkstücks bei der Bearbeitung durch eine Langdrehführungsbüchse erfolgt. Damit erfolgt das Bearbeiten des ersten Werkstücks in der Art des Langdrehens, wobei die Führung quer zur Spindelachse durch die Langdrehführungsbüchse möglichst nahe der einwirkenden Werkzeuge erfolgt.

Das Langdrehen kann dabei in unterschiedlichster Art und Weise realisiert werden, wobei stets eine Relativbewegung zwischen der Langdrehführungsbüchse und der Arbeitsspindel erforderlich ist.

Eine besonders günstige Lösung sieht dabei vor, daß die Langdrehführungsbüchse in Richtung der ersten Spindelachse unverschieblich am Maschinengestell gehalten ist, während zweckmäßigerweise die Verschiebbarkeit in Z-Richtung durch Verschieben der ersten Arbeitsspindel relativ zur Langdrehführungsbüchse erfolgt.

Weitere Merkmale der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Ansicht eines ersten Ausführungsbeispiels einer erfindungsgemäßen Drehmaschine;
- Fig. 2: eine Frontansicht in Richtung des Pfeils A in Fig. 1;
- Fig. 3: eine Draufsicht in Richtung des Pfeils B in Fig. 1 bei einem Betriebszustand, in welchem das fertig bearbeitete erste Werkstück durch die zweite Arbeitsspindel gerade übernommen wurde;

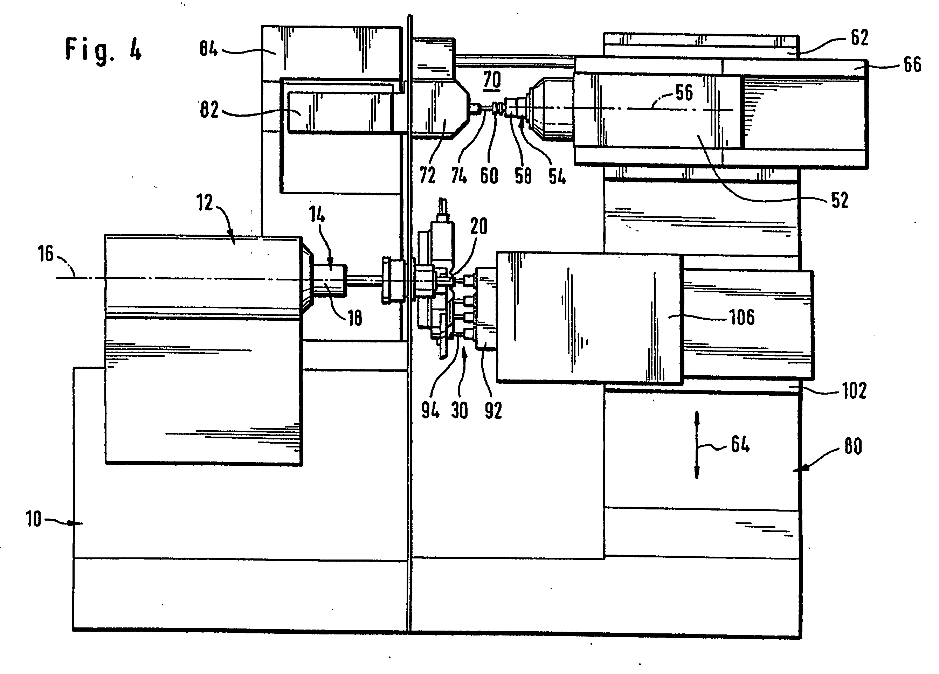

- Fig. 4: eine Darstellung ähnlich Fig. 3, bei welcher gleichzeitig eine Bearbeitung des ersten Werkstücks und des zweiten Werkstücks erfolgt;

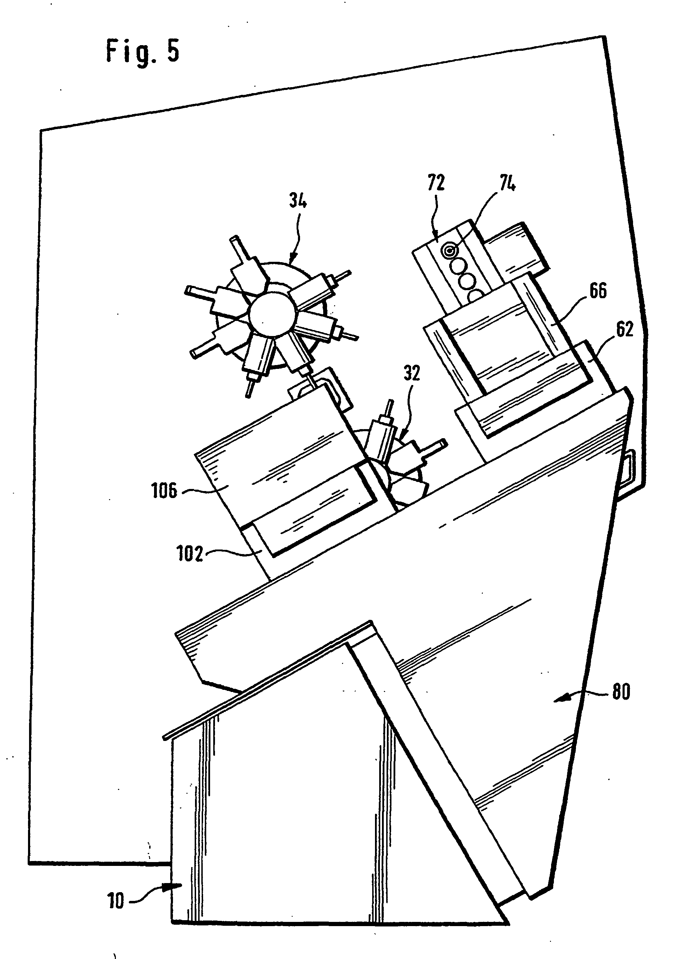

- Fig. 5: eine Ansicht in Richtung des Pfeils C in Fig. 1 bei maximal in Richtung des Maschinenbetts verfahrener Konsole;
- Fig. 6: eine Darstellung ähnlich Fig. 5 bei maximal vom Maschinenbett weg verfahrener Konsole;
- Fig. 7: eine vergrößerte perspektivischer Ansicht ähnlich Fig. 1, welche die Bearbeitung des zweiten Werkstücks mit einem zweiten frontseitigen Werkzeugträger mit einem obersten Werkzeug zeigt;
- Fig. 8: eine Darstellung ähnlich Fig. 7, welche eine Bearbeitung des zweiten Werkstücks mit einem untersten Werkzeug des zweiten frontseitigen Werkzeugträgers zeigt;
- Fig. 9: eine Darstellung ähnlich Fig. 7, in welcher eine Bearbeitung des zweiten Werkstücks ähnlich Fig. 7 erfolgt und Werkzeuge des ersten frontseitigen Werkzeugträgers am ersten Werkstück einsetzbar sind.;
- Fig. 10: eine ausschnittsweise perspektivische Darstellung eines zweiten Ausführungsbeispiels einer erfindungsgemäßen Drehmaschine;
- Fig. 11: eine perspektivische Darstellung des zweiten Ausführungsbeispiels gemäß Fig. 10 mit Blickrichtung in Richtung des Pfeiles D in Fig. 10;
- Fig. 12: eine Teilansicht des zweiten Ausführungsbeispiels ähnlich Fig. 2 bei in aktiver Stellung stehender erster Reihe von Werkzeugen des ersten frontseitigen Werkzeugträgers und in inaktiver Stellung stehender zweiter Reihe von Werkzeugen;
- Fig. 13: eine Darstellung ähnlich Fig. 12 bei in aktiver Stellung stehender zweiter Reihe von Werkzeugen des ersten frontseitigen Werkzeugträger und in inaktiver Stellung stehender erster Reihe von Werkzeugträgern des ersten frontseitigen Werkzeugträgers;
- Fig. 14: eine Darstellung ähnlich Fig. 12 bei in aktiver Stellung stehender erster Reihe von Werkzeugen, wobei diese in einem spitzen Winkel relativ zur ersten Spindelachse ausgerichtet sind;
- Fig. 15: eine Draufsicht auf das zweite Ausführungsbeispiel ähnlich Fig. 3 mit um 90° geschwenktem zweitem frontseitigen Werkzeugträger.
- Fig. 16: eine ausschnittsweise Darstellung der Konsole des zweiten Ausführungsbeispiel der erfindungsgemäßen Drehmaschine mit dem zweiten frontseitigen Werkzeugträger und der zweiten Arbeitsspindel jedoch senkrecht zur Schwenkachse 78 verlaufender zweiter Spindelachse und
- Fig. 17: eine Darstellung ähnlich Fig. 16 mit gegenüber der Schwenkachse 78 in einem Winkel von weniger als 90° verlaufender zweiter Spindelachse 56.

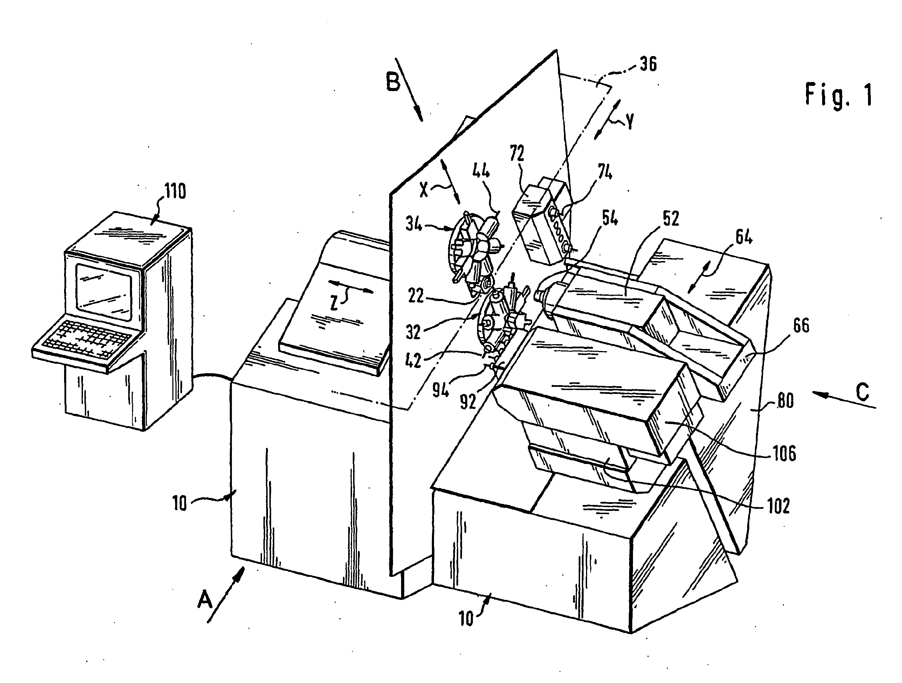

Ein erstes Ausführungsbeispiel einer erfindungsgemäßen Drehmaschine, dargestellt in Fig. 1, umfaßt ein als Ganzes mit 10 bezeichnetes Maschinengestell, an welchem ein erstes Spindelgehäuse 12 gelagert ist, in welchem eine erste Arbeitsspindel 14 um eine erste Spindelachse 16 drehbar gelagert ist.

Die erste Arbeitsspindel 14 ist dabei mit einer ersten Aufnahme 18 für ein erstes Werkstück 20 versehen, welches im dargestellten Fall als durch ein Endstück einer Materialstange 21 gebildet ist.

Die Materialstange 21 verläuft durch die erste Arbeitsspindel 14 hindurch und darüber hinaus von der ersten Aufnahme 18 bis zu einer Langdrehführungsbüchse 22, welche stationär am Maschinengestell 10 gehalten ist.

Um Die Materialstange 21 in die Langdrehführungsbüchse 22 einschieben und durch diese hindurchschieben zu können, ist das erste Spindelgehäuse 12 an einem Schlitten 24 gehalten, welcher in einer parallel zur ersten Spindelachse 16 verlaufenden Z-Richtung gegenüber dem Maschinengestell 10 verschiebbar ist.

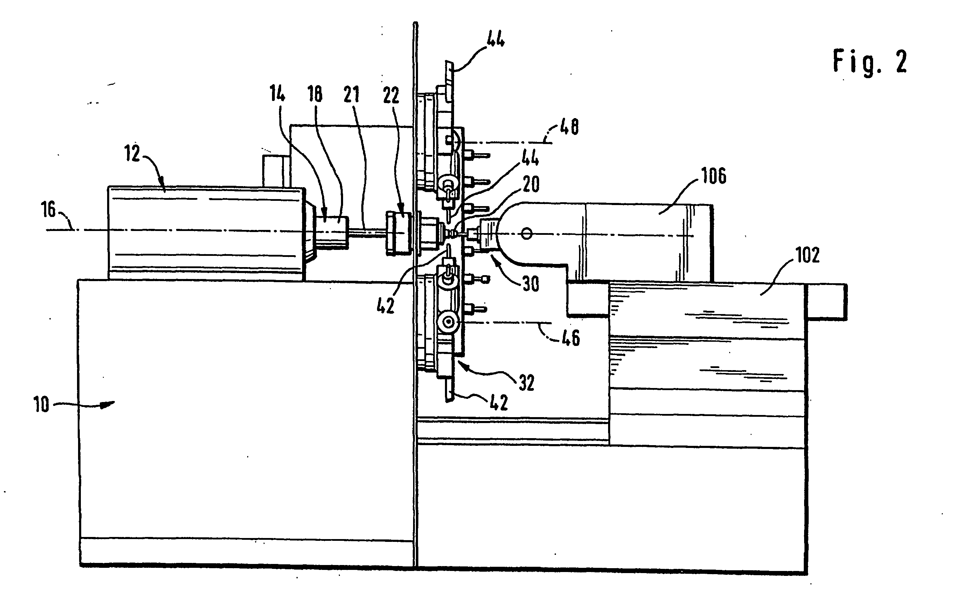

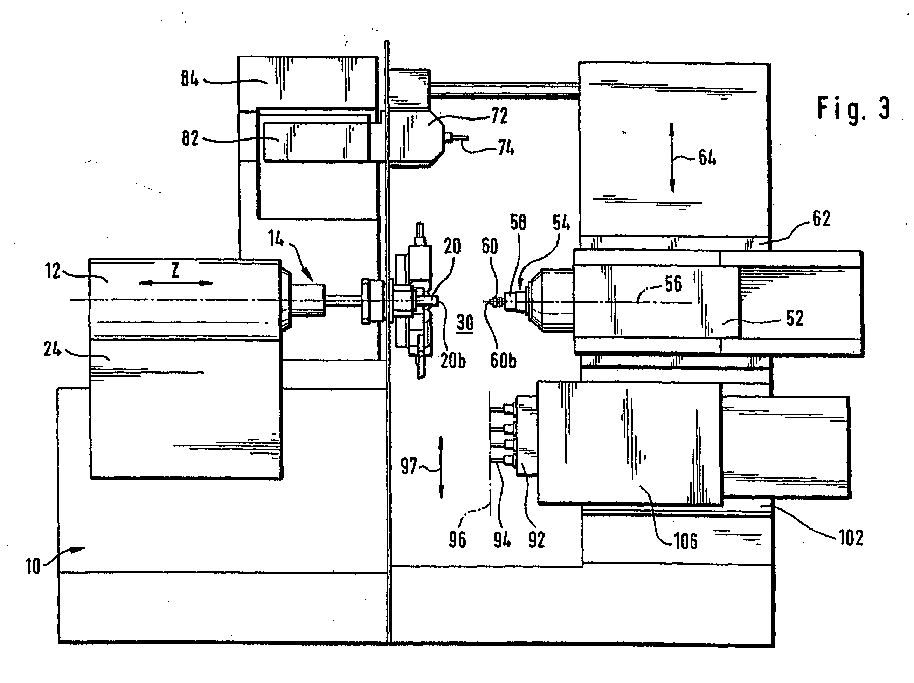

Auf einer der ersten Arbeitsspindel 14 gegenüberliegenden Seite der Langdrehführungsbüchse 22 ragt das Werkstück 20 in einen ersten Arbeitsraum 30 hinein, in welchem, wie in den Figuren 1 bis 3 dargestellt, eine Bearbeitung des Werkstücks 20 mit zwei Werkzeugträgern 32 und 34 möglich ist, die auf gegenüberliegenden Seiten einer durch die erste Spindelachse 16 hindurch verlaufenden Ebene 36 angeordnet sind und parallel zu einer senkrecht auf der Ebene 36 stehenden X-Richtung in Richtung des Werkstücks 20 bewegbar sind. Je nach Ausführungsform ist es auch noch möglich, einen oder beide Werkzeugträger 32, 34 zusätzlich in Y-Richtung, das heißt parallel zur Ebene 36 bewegbar auszuführen Vorzugsweise sind die Werkzeugträger 32 und 34 als Werkzeugrevolver ausgebildet, die mit einer Vielzahl von Werkzeugen 42 und 44 bestückbar sind, wobei die Werkzeugrevolver 32, 34 um Revolverachsen 46 bzw. 48 drehbar sind, welche vorzugsweise parallel zur ersten Spindelachse 16 verlaufen, wodurch die einzelnen Werkzeuge 42 bzw. 44 in ihre dem Werkstück 20 jeweils zugewandte Arbeitsstellung bringbar sind.

Die Bearbeitung des aus der Langdrehführungsbüchse 22 heraus in den ersten Arbeitsraum 30 hineinragenden Werkstücks 20 erfolgt einerseits durch Vorschub der Werkzeuge 42 bzw. 44 in X-Richtung und andererseits durch Verschieben des Werkstücks 20 in Z-Richtung durch Verschieben der Arbeitsspindel 14 in Z-Richtung mittels des Z-Schlittens 24, wobei die Arbeitsspindel 14 das Werkstück 20 mit der Aufnahme 18 festgespannt hält und drehend um die erste Spindelachse 16 antreibt, während die Langdrehführungsbüchse 22 das erste Werkstück 20 nur nahe des ersten Arbeitsraums 30 in radialer Richtung zur ersten Spindelachse 16 präzise führt und die Zerspanungskräfte aufnimmt.

Um das erste Werkstück 20 nicht nur mittels der Werkzeugträger 32 und 34 mit den Werkzeugen 42 bzw. 44 bearbeiten zu können, sondern eine Komplettbearbeitung des Werkstücks 20 durchführen zu können, ist am Maschinengestell 10 zusätzlich zur Arbeitsspindel 14 eine in einem zweiten Spindelgehäuse 52 drehbar gelagerte zweite Arbeitsspindel 54 vorgesehen, welche um eine vorzugsweise parallel zur ersten Spindelachse 16 ausgerichtete zweite Spindelachse 56 drehbar ist. Die zweite Arbeitsspindel 52 ist dabei so angeordnet, daß sie auf einer der Langdrehführungsbüchse 22 gegenüberliegenden Seite des ersten Arbeitsraums 30 positionierbar ist.

Die zweite Arbeitsspindel 54 ist dabei ebenfalls mit einer zweiten Aufnahme 58 zum Spannen eines Werkstücks 60 versehen, wobei das zweite Werkstück 60 durch Abstechen des ersten Werkstücks 20 von der Materialstange 21 erzeugbar ist.

Das zweite Spindelgehäuse 52 sitzt auf einem als Ganzes mit 62 bezeichneten Querschlitten, welcher in einer Querrichtung 64, die auch als Y-Richtung bezeichnet werden könnte, quer zur zweiten Spindelachse 56 und quer zur X-Richtung relativ zum Maschinengestell 10 bewegbar ist, wobei die Bewegbarkeit des Querschlittens 62 in der Querrichtung 64 die Möglichkeit umfaßt, die zweite Arbeitsspindel 54 mit der zweiten Spindelachse 56 koaxial zur ersten Spindelachse 16 auszurichten und somit das Werkstück 20 von der ersten Aufnahme 18 zu übernehmen.

Hierzu ist zusätzlich das zweite Spindelgehäuse 52 auf einem Z-Schlitten 66 angeordnet, welcher auf dem Querschlitten 62 sitzt und eine Bewegbarkeit des zweiten Spindelgehäuses 52 relativ zum Querschlitten 62 in Richtung parallel zur ersten Spindelachse 16 und zur zweiten Spindelachse 56 erlaubt.

Dadurch besteht die Möglichkeit, das Werkstück 20 durch Zusammenwirken der ersten Arbeitsspindel 14 und der zweiten Arbeitsspindel 54 bei koaxialer Ausrichtung der Spindelachsen 16 und 56 in einer Übergabestellung unter Zuhilfenahme von einem der Werkzeuge 42 oder 44 abzustechen und dann als zweites Werkstück 60 fertig zu bearbeiten, wobei hierzu die zweite Arbeitsspindel 54 mittels des Querschlittens 62 in der Querrichtung 64 aus dem ersten Arbeitsraum 30 heraus soweit verfahren wird, bis das zweite Werkstück 60 in einem zweiten Arbeitsraum 70 einem zweiten frontseitigen Werkzeugträger 72 zugewandt ist, dessen Werkzeuge 74 in ihrer Arbeitsstellung in Richtung des Werkstücks 60 weisen.

Durch die Verschiebbarkeit der zweiten Arbeitsspindel 54 von ihrer Übergabestellung in die Arbeitsstellung besteht die Möglichkeit, das von der Stange abgestochene zweite Werkstück 16 aus dem ersten Arbeitsraum 30 heraus in den zweiten Arbeitsraum 70 mittels der zweiten Arbeitsspindel 54 zu bewegen, wobei der zweite Arbeitsraum 70 neben dem ersten Arbeitsraum 30, beispielsweise die in der Querrichtung 64 seitlich versetzt angeordnet ist.

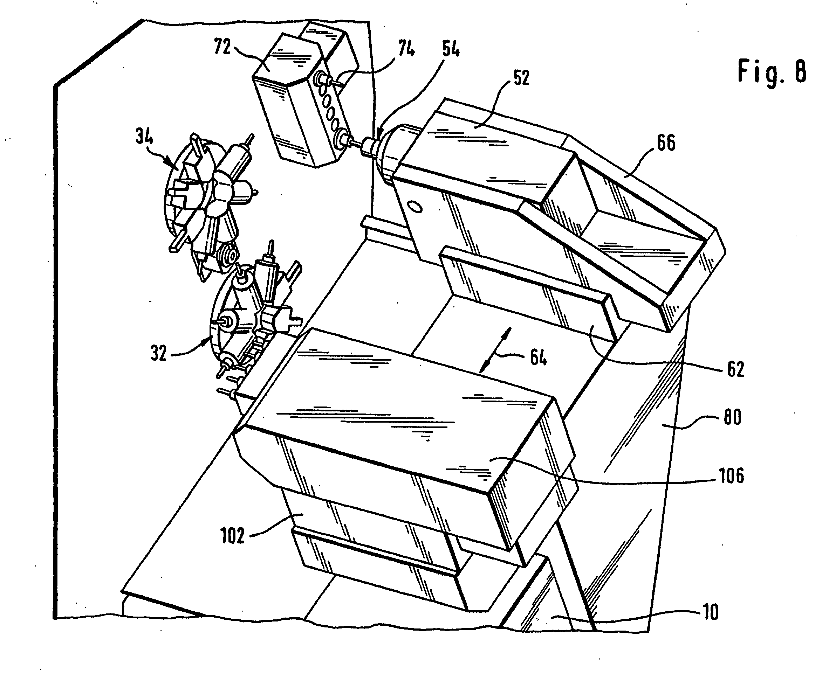

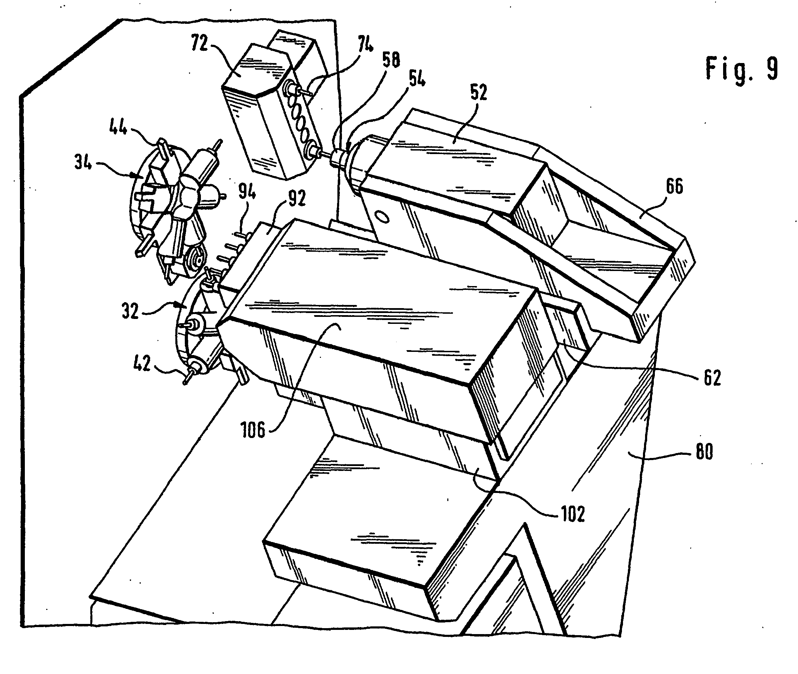

Vorzugsweise ist dabei der zweite frontseitige Werkzeugträger 72 auf einer der zweiten Arbeitsspindel 54 in ihrer Arbeitsstellung gegenüberliegenden Seite des zweiten Arbeitsraums 70 angeordnet, wobei sich beispielsweise die Werkzeuge 74 parallel zur zweiten Spindelachse 56 erstrecken und vorzugsweise, wie in Fig. 1 sowie 7 bis 9 dargestellt, als Reihe 76 entlang einer Längsrichtung 77 angeordnet, sind, die vorzugsweise parallel zur X-Richtung verläuft.

Um nun alle in der Längsrichtung 77 aufeinanderfolgend angeordneten Werkzeuge 74 mit dem in der zweiten Arbeitsspindel 54 gehaltenen zweiten Werkstück 60 erreichen zu können, ist der Werkzeugträger 72 selbst gegenüber einer den Querschlitten 62 für die zweite Arbeitsspindel 54 tragenden Konsole 80 mittels eines X-Schlittens 82 bewegbar, wobei der X-Schlitten 82 vorzugsweise an einer sich in X-Richtung erstreckenden Wange 84 der Konsole 80 geführt ist.

Um zusätzliche Möglichkeiten bei der Bearbeitung des ersten Werkstücks 20 zu haben, ist ein erster frontseitiger Werkzeugträger 92 vorgesehen, welcher auf einer dem Arbeitsraum 30 gegenüberliegenden Seite der Langdrehführungsbüchse 22 angeordnet ist und Werkzeuge 94 trägt, die am ersten Werkstück 20, beispielsweise zur Bearbeitung von dessen Frontseite 20S, einsetzbar sind.

Der Werkzeugträger 92 sitzt dabei auf einem Querschlitten 102, weicher gegenüber der Konsole 80 in der Querrichtung 64 bewegbar ist und auf diesem Querschlitten 102 sitzt ein Z-Schlitten 106, der dann seinerseits dem Werkzeugträger 92 trägt.

Der Querschlitten 102 ist dabei erfindungsgemäß unabhängig von dem Querschlitten 62 für die zweite Arbeitsspindel 54 in der Querrichtung 64 gegenüber der Konsole 80 bewegbar, so daß die Bearbeitung des ersten Werkstücks 20, geführt in der Langdrehführungsbüchse 22 mittels der Werkzeuge 94 sowohl in der Querrichtung 64 als auch der Z-Richtung unabhängig von der Bearbeitung des zweiten Werkstücks 16 mittels der Werkzeuge 74 erfolgen kann.

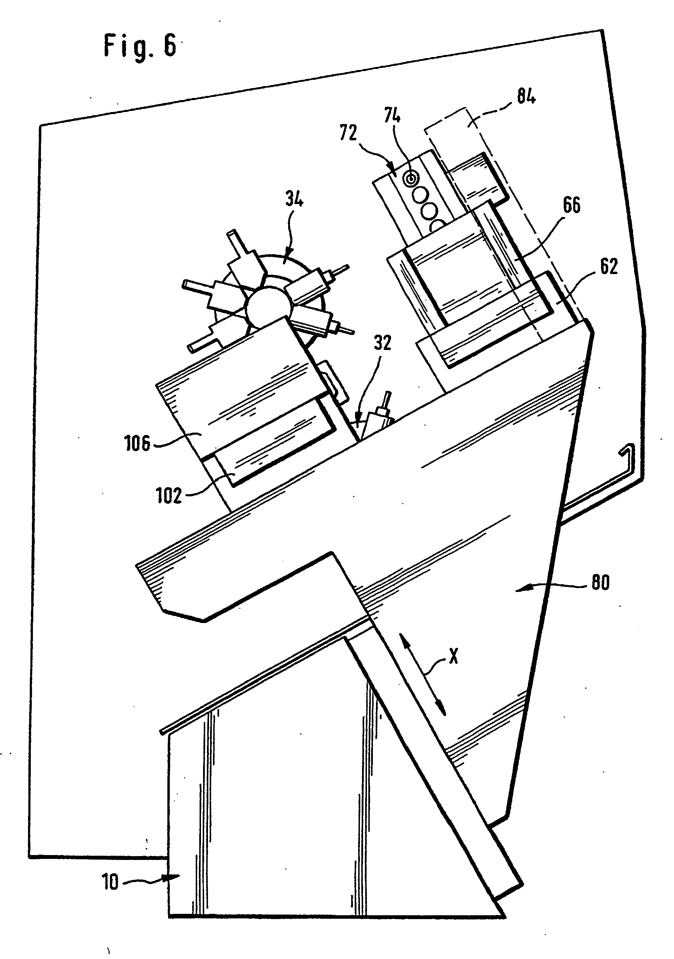

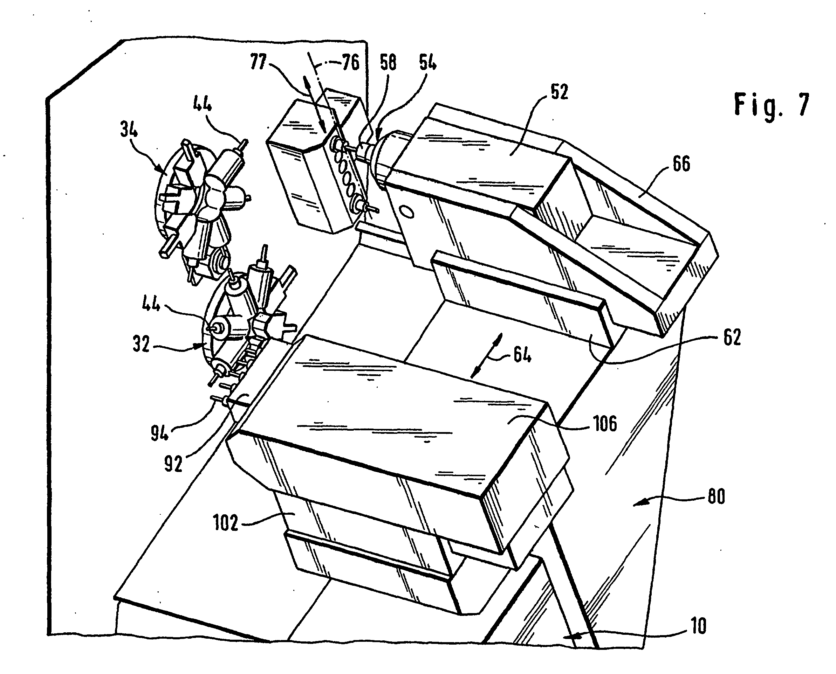

Um das erste in der Langdrehführungsbüchse 22 gehaltene Werkstück 20 mittels der Werkzeuge 94 3-achsig bearbeiten zu können, das heißt durch eine Achsbewegung in Richtung parallel zur ersten Arbeitsspindel 16, in diesem Fall in Richtung der Z-Achse, durch Bewegen in Richtung der X-Achse als auch durch Bewegen in Richtung der Querachse 54, ist die gesamte Konsole 80 als X-Schlitten ausgebildet und als solcher relativ zum Maschinengestell 10 parallel zur X-Richtung bewegbar, wie in den Fig. 6 und 7 dargestellt.

Somit besteht mit dem ersten Ausführungsbeispiel der erfindungsgemäßen Drehmaschine die Möglichkeit, das Teil der Materialstange 21 bildende erste Werkstück 20, welches,über die Langdrehführungsbüchse 22 in den ersten Arbeitsraum 30 übersteht, mittels der Werkzeuge 42 und 44 der Werkzeugträger 32 und 34 und außerdem mittels den Werkzeugen 94 des ersten frontseitigen Werkzeugträgers 92 zu bearbeiten, wobei die Werkzeuge 94 vorzugsweise als Reihe 96 in der Längsrichtung 97 aufeinanderfolgend angeordnet sind, wobei die Reihe 96 parallel zur Ebene 36 verläuft, so daß zumindest dann, wenn mit den Werkzeugen 94 eine Bearbeitung der Stirnseite 20S des Werkstücks 20 erfolgt, eine Kollision zwischen den Werkzeugen 42 und 44 sowie 94 vermieden werden kann.

Dabei kann - wie bereits dargelegt - die Bearbeitung der Stirnseite 20S des Werkstücks 20 durch Bewegung der Werkzeuge 94 in drei verschiedenen Achsrichtungen, das heißt in Richtung der X-Achse, in Richtung der Querachse 64 und in Richtung der Z-Achse, welche parallel zur ersten Spindelachse 16 verläuft, erfolgen.

Ferner ist nach Bearbeitung des ersten Werkstücks 20 ein Übergeben desselben in die zweite Arbeitsspindel 54 möglich, wobei hierzu die zweite Arbeitsspindel 54 mit ihrer zweiten Spindelachse 56 koaxial zur ersten Spindelachse 16 ausgerichtet und in Richtung des ersten Werkstücks 20 soweit verschoben wird, daß mit der zweiten Aufnahme 58 das erste Werkstück 20 nahe der Stirnseite 20S gespannt werden kann. Nachfolgend erfolgt ein Abstechen des ersten Werkstücks 20 von der Materialstange 21 mit einem der Werkzeuge 42 oder 44.

Das abgestochene und nunmehr in der zweiten Aufnahme 58 gehaltene Werkstück stellt sodann ein zweites Werkstück 60 dar, welches durch Verfahren der zweiten Arbeitsspindel 54 in der Querrichtung 64 durch die Werkzeuge 74 des Werkzeugträgers 72 im zweiten Arbeitsraum 70 weiter bearbeitet werden kann, wobei primär eine Bearbeitung des zweiten Werkstücks 60 im Bereich seiner Stirnseite 60S in dem zweiten Arbeitsraum 70 neben dem ersten Arbeitsraum 30 erfolgen kann.

Diese Bearbeitung des zweiten Werkstücks 60 mittels der Werkzeuge 74 ist völlig unabhängig von der Position der Konsole 80 in X-Richtung, da der Werkzeugträger 72 an dem X-Schlitten 82 gehalten ist, welcher seinerseits an der Wange 84 der Konsole 80 in X-Richtung verschiebbar geführt ist, so daß der Werkzeugträger 72 dadurch stets Relativbewegungen zur Konsole 80 und somit Relativbewegungen auch zur zweiten Spindelachse 56 in X-Richtung durchführt, die in X-Richtung unverschieblich relativ zur Konsole 80 angeordnet ist, so daß die Positionen der Konsole 80 in X-Richtung sich lediglich auf die Relativpositionen der Werkzeuge 94 des ersten frontseitigen Werkzeugträgers 92 zur Bearbeitung des ersten Werkstücks 20 in der bereits beschriebenen Art und Weise auswirken.

Vorzugsweise erfolgt die Bearbeitung der ersten Werkstücke 20 und der zweiten Werkstücke 60 derart, daß während einer Fertigbearbeitung eines zweiten Werkstücks 60 mittels der Werkzeuge 74 im zweiten Arbeitsraum 70 gleichzeitig eine Bearbeitung des nachfolgenden ersten Werkstücks 20 im ersten Arbeitsraum 30 mittels der Werkzeuge 42, 44 und/oder gegebenenfalls der Werkzeuge 94 erfolgt, wobei der Wechsel zwischen unterschiedlichen Werkzeugen 94 des ersten frontseitigen Werkzeugträgers 92 durch Verschieben des Querschlittens 102 in der Querrichtung 64 relativ zum jeweiligen ersten Werkstück 20 erfolgen kann.

Zur Durchführung der Bearbeitungen ist eine Maschinensteuerung 110 vorgesehen, welche sämtliche Achsbewegungen positionsgenau steuert, also insbesondere die Bewegungen des Z-Schlittens 24 für die erste Arbeitsspindel 14, der Werkzeugträger 32 und 34 für die Werkzeuge 42 und 44, des Querschlittens 102 und des Z-Schlittens 106 sowie des X-Schlittens 80 für den ersten frontseitigen Werkzeugträger 92 mit den Werkzeugen 94, des Querschlittens 62 und des Z-Schlittens 66 für die zweite Arbeitsspindel 54 und des X-Schlittens 82 für den zweiten frontseitigen Werkzeugträger 72 mit den Werkzeugen 74.

Außerdem sind vorzugsweise auch noch die Arbeitsspindeln 14 und 54 nicht nur antreibbar, sondern auch als C-Achsen mittels der Maschinensteuerung 110 winkelgenau steuerbar.

Besonders vorteilhaft läßt sich die erfindungsgemäße Drehmaschine dadurch steuern, daß die Achsbewegungen für die Bearbeitung des zweiten Werkstücks 60 mittels den Werkzeugen 74, nämlich die Bewegungen des zweiten frontseitigen Werkzeugträgers 72 längs der X-Achse, die Bewegungen der zweiten Arbeitsspindel 54 in Richtung der Querachse 64, die auch als Y-Achse bezeichnet werden könnte, und in Richtung der Z-Achse sowie die Drehung des zweiten Werkstücks 60 durch die zweite Arbeitsspindel 54 um eine C-Achse bereits aufgrund der Konstruktion der Drehmaschine völlig unabhängig sind, von den Achsbewegungen zur Bearbeitung des ersten Werkstücks 20, nämlich die Bewegung des ersten Werkstücks 20 in Z-Richtung durch Verschieben der ersten Arbeitsspindel 14, die Bewegung der Werkzeuge 42 und 44 in X-Richtung, die Bewegung der Werkzeuge 94 in X-Richtung durch Verschieben der Konsole 80, in Querrichtung durch Verfahren des Querschlittens 102 und in Z-Richtung durch Verfahren des Querschlittens 106 sowie um die C-Achse durch geeignetes gesteuertes Drehen der Arbeitsspindel 14.

Darüber hinaus ist durch das Vorsehen der Bewegbarkeit des zweiten frontseitigen Werkzeugträgers 72 relativ zur Konsole 80 ein Maximum an Steifigkeit hinsichtlich der Führung der Werkzeuge 74 relativ zum zweiten Werkstück 60 bei minimaler thermischer Verlagerung erreicht.

Darüber hinaus bringt die Verschiebbarkeit der Konsole 80 in X-Richtung noch den Vorteil, daß eine 2-achsige Bewegung der zweiten Arbeitsspindel 54 zum koaxialen Positionieren der zweiten Spindelachse 56 relativ zur ersten Spindelachse 16, nämlich längs der Querachse 64 und der X-Achse zur Verfügung steht.

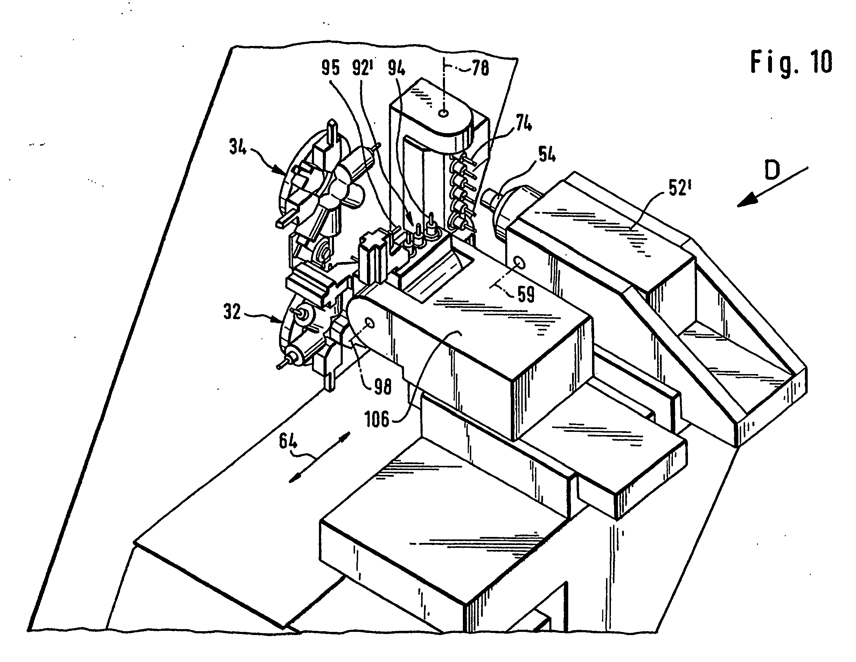

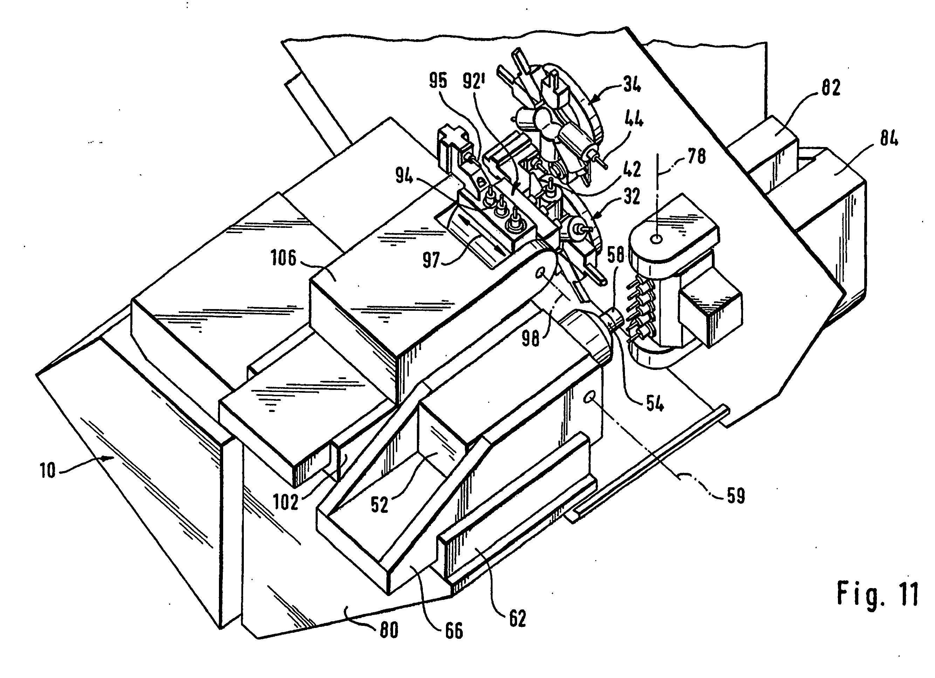

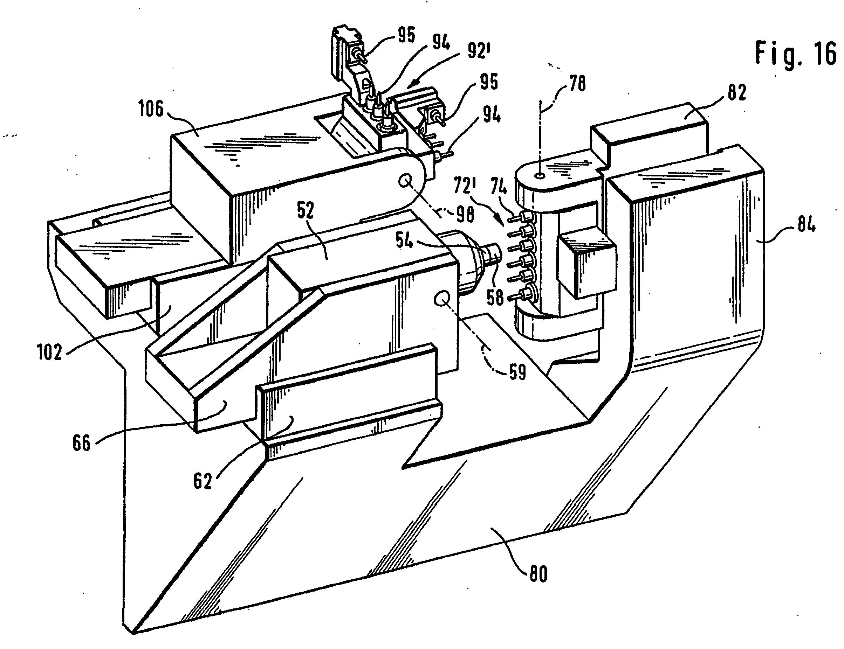

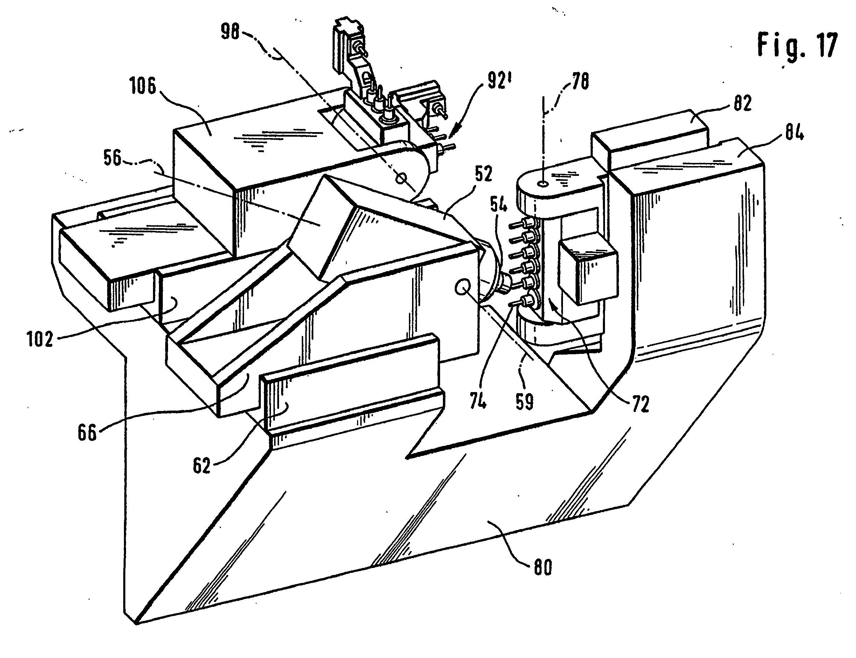

Bei einem zweiten Ausführungsbeispiel einer erfindungsgemäßen Drehmaschine, dargestellt in den Fig. 10 bis 17, sind diejenigen Teile, die mit denen des ersten Ausführungsbeispiels identisch sind, mit denselben Bezugszeichen versehen, so daß vollinhaltlich auf die Ausführungen zum ersten Ausführungsbeispiel Bezug genommen werden kann.

Wie in Fig. 10 bis 14 dargestellt, ist im Gegensatz zum ersten Ausführungsbeispiel der der Stirnseite 20S des ersten Werkstücks zugewandte erste frontseitige Werkzeugträger 92' nicht als fest mit dem Z-Schlitten 106 verbundener Werkzeugträger ausgebildet, sondern als ein gegenüber dem Z-Schlitten 106 um eine Achse 98 schwenkbarer Werkzeugträger 92', welcher zwei Reihen 96a und 96b von Werkzeugen 94a bzw. 94b aufweist, die durch Schwenken des ersten frontseitigen Werkzeugträgers 92' um die Schwenkachse 98 jeweils in eine aktive Stellung oder eine inaktive Stellung bringbar sind.

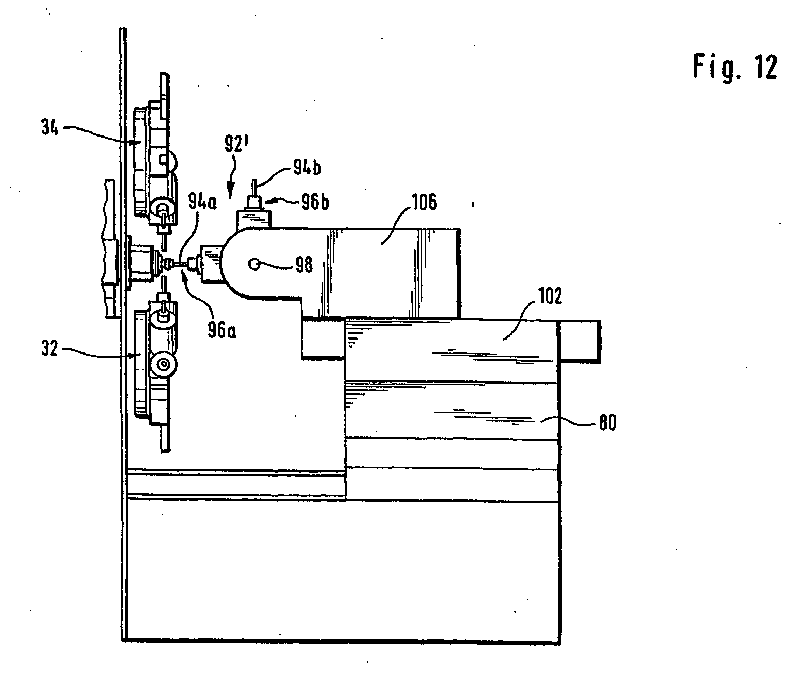

So ist beispielsweise, wie in Fig. 10 und 12 dargestellt, die Reihe 96a von Werkzeugen 94a in der aktiven Stellung, während die Reihe 96b von Werkzeugen 94b in der inaktiven Stellung steht.

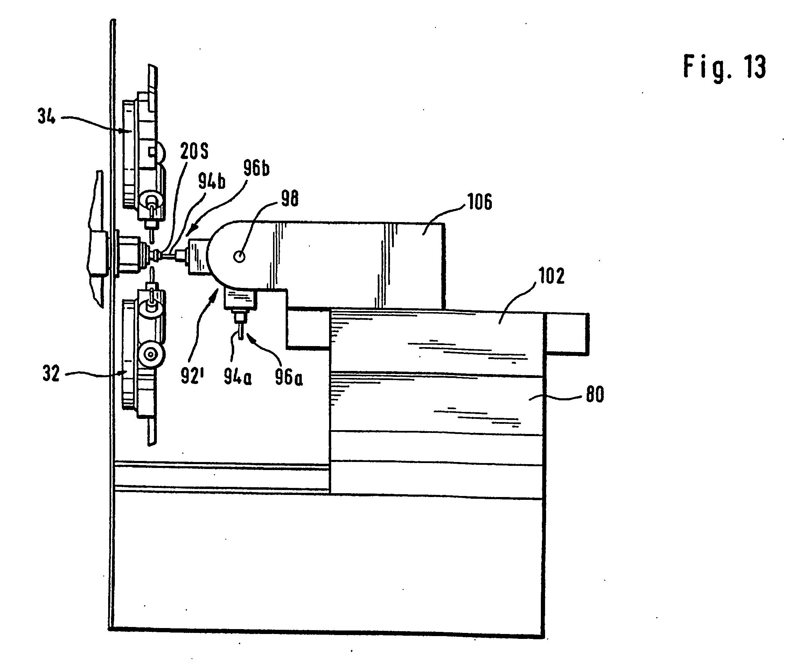

Durch Schwenken ist andererseits, wie in Fig. 13 dargestellt, die Reihe 96b von Werkzeugen 94b in die aktive Stellung bringbar, während die Reihe 96a von Werkzeugen 94a in der inaktiven Stellung steht.

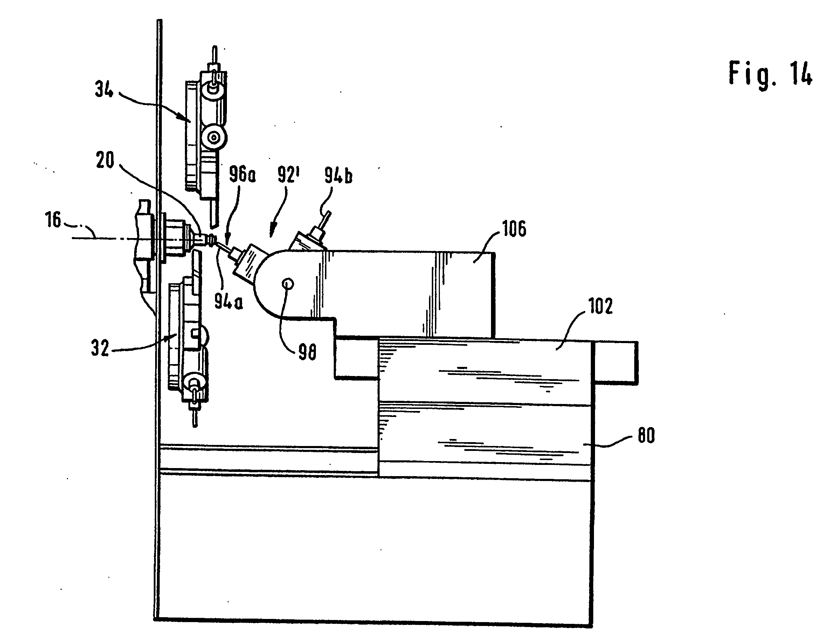

Darüber hinaus besteht auch noch bei Ausbildung der Schwenkachse 98 als durch die Maschinensteuerung 110 steuerbare B-Achse, wie in Fig. 14 dargestellt, die Möglichkeit, die Werkzeuge, beispielsweise die Werkzeuge 94a der Reihe 96a in eine gegenüber der ersten Spindelachse 16 im Winkel verlaufende Position zu bringen, so daß schräg zur ersten Spindelachse 16 gerichtete Bearbeitungen des ersten Werkstücks 20, beispielsweise Bohrungen, realisierbar sind.

Vorzugsweise verlaufen die Werkzeuge 94a, 94b in radialer Richtung zur Schwenkachse 98, so daß die Zerspanungskräfte ein minimales Drehmoment bezüglich der Schwenkachse 98 bewirken.

Ferner besteht nicht nur die Möglichkeit, in dem Werkzeugträger 92' radial zur Schwenkachse 98 gerichtete Werkzeuge 94 einzusetzen, sondern es besteht auch die Möglichkeit, durch geeignete Werkzeughalter Werkzeuge 95 einzusetzen, die parallel zur Schwenkachse 98 ausgerichtet sind, und somit die Möglichkeit einer mantelseitigen Bearbeitung des Werkstücks 20, also auch eine Bearbeitung des Werkstücks 20 in einem sich an die Stirnseite 20S anschließenden Bereich, eröffnen.

Vorzugsweise ist die Schwenkachse 98 so ausgerichtet, daß sie parallel zu der Längsrichtung 97 der Reihen 96a und 96b verläuft und außerdem vorzugsweise parallel zur Ebene 36, so daß eine möglichst kollisionsfreie Bearbeitung des ersten Werkstücks 20 mit Werkzeugen 94 und 95 des Werkzeugträgers 92 ergänzend zu den Werkzeugen 42 und 44 realisierbar ist.

Darüber hinaus ist, wie insbesondere in den Figuren 10, 11, 15 bis 17 dargestellt, auch der dem zweiten Arbeitsraum 70 zugeordnete zweite frontseitige Werkzeugträger 72' um eine Schwenkachse 78 gegenüber dem X-Schlitten 82 verschwenkbar, so daß die Möglichkeit besteht, die Werkzeuge 74 nicht nur parallel zur zweiten Arbeitsspindel 56 auszurichten, sondern bei Ausbildung der Schwenkachse 78 als durch die Maschinensteuerung 110 steuerbare B-Achse auch in beliebigen Winkeln relativ zu dieser.

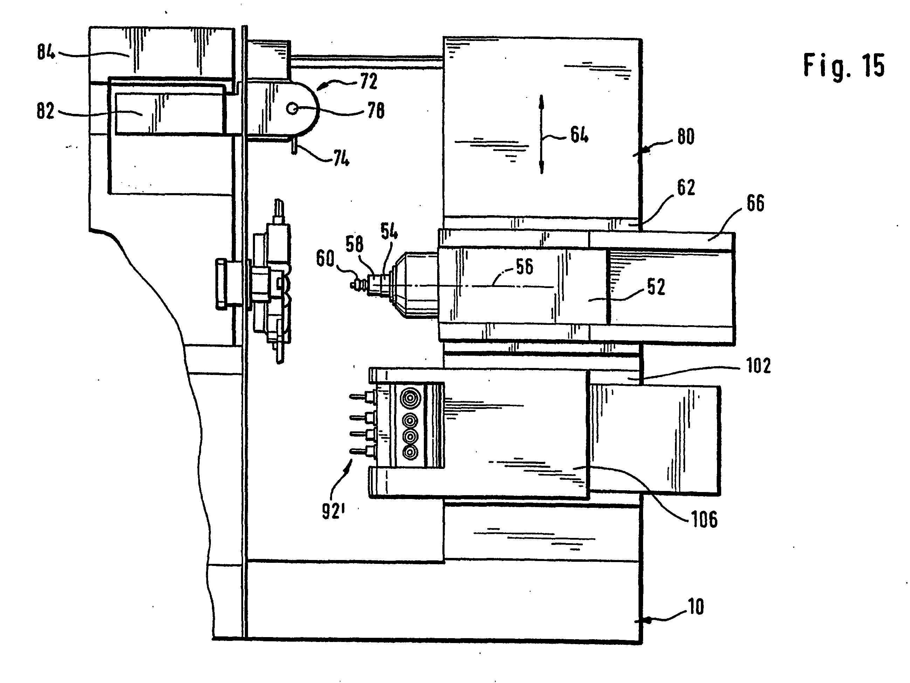

Im Extremfall besteht die Möglichkeit, wie in Fig. 15 dargestellt, das Werkzeug 74 des Werkzeugträgers 72 durch Drehung um die Schwenkachse 78 um ungefähr 90° so weit zu drehen, daß dieses quer zur zweiten Spindelachse 56 der zweiten Arbeitsspindel 54 verläuft.

Vorzugsweise ist die Schwenkachse 78 so ausgerichtet, daß sie parallel zur Längsrichtung 77 verläuft, längs welcher die die Reihe 76 bildenden Werkzeuge 74 ausgerichtet sind und außerdem vorzugsweise parallel zur X-Richtung, so daß sich durch Schwenken der Werkzeuge 74 um die Schwenkachse 78 deren Position in X-Richtung relativ zur zweiten Arbeitsspindel 54 nicht ändert.

Zur Minimierung des auf die Schwenkachse 78 bei der Zerspanung wirkenden Drehmoments sind die Werkzeuge 74 vorzugsweise so ausgerichtet, daß sie radial zur Schwenkachse 78 verlaufen.

Darüber hinaus ist bei dem zweiten Ausführungsbeispiel das Spindelgehäuse 52' der zweiten Arbeitsspindel 54 um eine ebenfalls durch die Maschinensteuerung 110 steuerbare Schwenkachse 59 schwenkbar, welche vorzugsweise quer zur Schwenkachse 78 verläuft, so daß damit insgesamt die zweite Spindelachse 56 aus ihrer Orientierung parallel zur Ebene 36 heraus bewegbar ist und somit in beliebigen Winkelstellungen, beispielsweise in einem spitzen Winkel zur Ebene 36, positionierbar ist, um beispielsweise mit den Werkzeugen 74, die vorzugsweise alle parallel zur Ebene 36 orientiert sind, Bearbeitungen schräg zur zweiten Spindelachse 56 vornehmen zu können.

Ergänzend zum ersten Ausführungsbeispiel hat das zweite Ausführungsbeispiel noch die zusätzlichen Vorteile, daß durch die Schwenkachse 78 für den zweiten frontseitigen Werkzeugträger 72, insbesondere deren Steuerung als B-Achse mittels der Maschinensteuerung 110, zusammen mit der Steuerung der zweiten Arbeitsspindel 54 als C-Achse, alle üblichen Bearbeitungen des zweiten Werkstücks 60 durch eine B-Achse einer Drehmaschine realisierbar sind.

Darüber hinaus läßt sich die konstruktive Lösung noch besonders stabil dadurch gestalten, daß die Werkzeuge 74 des zweiten Werkzeugträgers sich vorzugsweise radial zur Schwenkachse 78 erstrecken, so daß die auf diese wirkenden Zerspanungskräfte ein geringes, wenn nicht verschwindendes Drehmoment auf die Schwenkachse 78 ausüben, so daß diese mit mechanisch begrenztem Aufwand ausreichend steif realisierbar ist.

Vorzugsweise wird die Schwenkachse 78 so realisiert, daß mindestens eine Schwenkbewegung des zweiten frontseitigen Werkzeugträgers 92' um einen Winkel von 90° realisierbar ist.

Das zweite Ausführungsbeispiel hat darüber hinaus durch das Vorsehen der Schwenkachse 98 für den ersten frontseitigen Werkzeugträger 92 den Vorteil, daß sich die Zahl der einsetzbaren Werkzeuge durch das Vorsehen der zwei Reihen 96a und 96b von Werkzeugen 94a bzw. 94b vervielfachen läßt.

Darüber hinaus sind durch Steuerung der Schwenkbewegung des ersten frontseitigen Werkzeugträgers 92 um die durch die Maschinensteuerung 110 als B-Achse ausgebildete Schwenkachse 98 übliche B-Achsbearbeitungen am ersten Werkstück 20 realisierbar.

Auch der erste frontseitige Werkzeugträger 92' ist vorzugsweise um die Schwenkachse 98 mit einem Winkel von mindestens 90° schwenkbar.

Schließlich schafft auch die Schwenkachse 59 für die zweite Arbeitsspindel 14 noch den Vorteil, der Einstellung einer weiteren Neigung zwischen den Werkzeugen 74 des zweiten frontseitigen Werkzeugträgers 72 und dem zweiten Werkstück 60, so daß zum Fertigbearbeiten der zweiten Werkstücke 60 auch hochkomplexe Bearbeitungen möglich sind.

## Patentansprüche

1. Drehmaschine umfassend
ein Maschinengestell (10),
eine am Maschinengestell (10) gehaltene erste und um eine erste Spindelachse (16) drehbare Arbeitsspindel (14) mit einer ersten Aufnahme (18) für ein erstes Werkstück (20),
mindestens einen ersten Werkzeugträger. (32, 34), welcher zur Bearbeitung des ersten Werkstücks (20) in einer X-Richtung quer zur ersten Spindelachse (16) bewegbar ist,
eine zweite und um eine zweite Spindelachse (56) drehbare Arbeitsspindel (54), welche eine zweite Werkstückaufnahme (58) für ein zweites Werkstück (60) aufweist und welche gegenüber der ersten Arbeitsspindel (14) in einer quer zur X-Richtung und quer zur ersten Spindelachse (16) verlaufenden Querrichtung (64) von einer mit der zweiten Spindelachse (56) zur ersten Spindelachse (16) koaxialen Stellung in eine nicht koaxiale Stellung bringbar ist, in welcher die erste und zweite Spindelachse (16, 56) im Abstand voneinander angeordnet sind,
und einen einem ersten Arbeitsraum (30) zugeordneten ersten frontseitigen Werkzeugträger (92) zur Bearbeitung des ersten Werkstücks (20), der durch eine Bewegung quer zur X-Richtung mit mindestens einem Werkzeug (94) von einer inaktiven in eine aktive Stellung und umgekehrt bewegbar ist,
und einen einem zweiten Arbeitsraum (70) zugeordneten zweiten frontseitigen Werkzeugträger (72) zur Bearbeitung des zweiten Werkstücks (60), der in der Querrichtung (64) gegenüber dem ersten Arbeitsraum (30) versetzt angeordnet ist,
**dadurch gekennzeichnet, daß**
der erste frontseitige Werkzeugträger (92) und die zweite Arbeitsspindel (54) in der Querrichtung (64) relativ zueinander durch eine Maschinensteuerung (110) gesteuert bewegbar sind.

2. Drehmaschine nach Anspruch 1, **dadurch gekennzeichnet, daß** der erste frontseitige Werkzeugträger (92) und die zweite Arbeitsspindel (54) jeweils auf einem, in der Querrichtung (64) bewegbaren Querschlitten (62, 102) sitzen.

3. Drehmaschine nach Anspruch 2, **dadurch gekennzeichnet, daß** der erste frontseitige Werkzeugträger (92) auf derselben Konsole (80) sitzt wie die zweite Arbeitsspindel (54) mit ihrem Querschlitten (62, 102).

4. Drehmaschine nach einem der voranstehenden Ansprüche, **dadurch gekennzeichnet, daß** der erste frontseitige Werkzeugträger (92) und die zweite Arbeitsspindel (54) auf einem gemeinsamen, in X-Richtung gegenüber dem Maschinengestell (10) bewegbaren Schlitten (80) sitzen.

5. Drehmaschine nach einem der voranstehenden Ansprüche, **dadurch gekennzeichnet, daß** der zweite frontseitige Werkzeugträger (72) quer zur zweiten Spindelachse (56) und in einer quer zur Querrichtung (64) verlaufenden Richtung (X) bewegbar ist.

6. Drehmaschine nach Anspruch 5, **dadurch gekennzeichnet, daß** der zweite frontseitige Werkzeugträger (72) ungefähr in X-Richtung bewegbar ist.

7. Drehmaschine nach Anspruch 5 oder 6, **dadurch gekennzeichnet, daß** der zweite frontseitige Werkzeugträger (72) an der den Querschlitten (62) für die zweite Arbeitsspindel (54) tragenden Konsole (80) bewegbar geführt ist.

8. Drehmaschine nach einem der voranstehenden Ansprüche, **dadurch gekennzeichnet, daß** die zweite Arbeitsspindel (54) in Richtung (Z) der zweiten Spindelachse (56) bewegbar ist:

9. Drehmaschine nach Anspruch 8, **dadurch gekennzeichnet, daß** die zweite Arbeitsspindel (54) auf einem Z-Schlitten (66) sitzt, welcher seinerseits auf dem Querschlitten (62) angeordnet ist.

10. Drehmaschine nach einem der voranstehenden Ansprüche, **dadurch gekennzeichnet, daß** die zweite Arbeitsspindel (54) um eine quer zur zweiten Spindelachse (56) verlaufende Schwenkachse (59) schwenkbar ist.

11. Drehmaschine nach Anspruch 10, **dadurch gekennzeichnet, daß** die Schwenkachse (59) quer zur X-Richtung verläuft.

12. Drehmaschine nach Anspruch 11, **dadurch gekennzeichnet, daß** die Schwenkachse (59) ungefähr parallel zur Querrichtung (64) verläuft.

13. Drehmaschine nach einem der voranstehenden Ansprüche, **dadurch gekennzeichnet, daß** der erste frontseitige Werkzeugträger (92)in Richtung parallel (Z) zur ersten Spindelachse (16) bewegbar ist.

14. Drehmaschine nach Anspruch 13, **dadurch gekennzeichnet, daß** der erste frontseitige Werkzeugträger (92) und die zweite Arbeitsspindel (54) in Richtung der Spindelachsen (16, 56) unabhängig voneinander bewegbar sind.

15. Drehmaschine nach Anspruch 14, **dadurch gekennzeichnet, daß** der erste frontseitige Werkzeugträger (92) auf einem in Z-Richtung bewegbaren Z-Schlitten (106) sitzt, welcher seinerseits auf dem Querschlitten (102) sitzt.

16. Drehmaschine nach einem der voranstehenden Ansprüche, **dadurch gekennzeichnet, daß** der erste frontseitige Werkzeugträger (92) eine Reihe (96) von in einer Längsrichtung (97) aufeinanderfolgend angeordneten Werkzeugen (94) aufweist.

17. Drehmaschine nach Anspruch 16, **dadurch gekennzeichnet, daß** die Längsrichtung (97) ungefähr parallel zur Querrichtung (64) verläuft.

18. Drehmaschine nach einem der voranstehenden Ansprüche, **dadurch gekennzeichnet, daß** der erste frontseitige Werkzeugträger (92') mindestens zwei um eine Schwenkachse (98) im Winkelabstand zueinander angeordnete Werkzeuge (94a, b) aufweist, welche durch Verschwenken des Werkzeugträgers (92') um die Schwenkachse (98) in eine aktive oder inaktive Stellung bringbar sind.

19. Drehmaschine nach Anspruch 18, **dadurch gekennzeichnet, daß** die Schwenkachse (98) ungefähr parallel zur Querrichtung (64) verläuft.

20. Drehmaschine nach Anspruch 18 oder 19, **dadurch gekennzeichnet, daß** die Schwenkachse (98) als durch die Maschinensteuerung (110) steuerbare B-Achse ausgebildet ist.

21. Drehmaschine nach einem der voranstehenden Ansprüche, **dadurch gekennzeichnet, daß** der zweite frontseitige Werkzeugträger (72) eine Reihe (76) von in einer Längsrichtung (77) aufeinanderfolgend angeordneten Werkzeugen (74) aufweist.

22. Drehmaschine nach Anspruch 21, **dadurch gekennzeichnet, daß** die Längsrichtung (77) ungefähr parallel zur. Bewegungsrichtung (X) des zweiten frontseitigen Werkzeugträger (72) verläuft.

23. Drehmaschine nach einem der voranstehenden Ansprüche, **dadurch gekennzeichnet, daß** der zweite frontseitige Werkzeugträger (72') mindestens zwei im Winkelabstand um eine Schwenkachse (78) angeordnete Werkzeuge (74) aufweist, die durch ein Schwenken des zweiten Werkzeugträgers (72) um die Schwenkachse (78) von einer aktiven in eine inaktive Stellung und umgekehrt bewegbar sind.

24. Drehmaschine nach Anspruch 23, **dadurch gekennzeichnet, daß** die Schwenkachse (78) ungefähr parallel zur Bewegungsrichtung des zweiten frontseitigen Werkzeugträgers (72') verläuft.

25. Drehmaschine nach Anspruch 23 oder 24, **dadurch gekennzeichnet, daß** die Schwenkachse (78) als von der Maschinensteuerung (110) steuerbare B-Achse ausgebildet ist.

26. Drehmaschine nach einem der Ansprüche 18 bis 25, **dadurch gekennzeichnet, daß** die Werkzeuge (74, 94) der frontseitigen Werkzeugträger (72, 92) so relativ zur Schwenkachse (78, 98) angeordnet sind, daß die beim Zerspanen auf die Werkzeuge (74, 94) wirkende Kraft im wesentlichen in radialer Richtung zur Schwenkachse (78, 98) gerichtet ist.

27. Drehmaschine nach einem der voranstehenden Ansprüche, **dadurch gekennzeichnet, daß** die erste Arbeitsspindel (14) in Richtung der ersten Spindelachse (16) verfahrbar am Maschinengestell geführt ist.

28. Drehmaschine nach einem der voranstehenden Ansprüche, **dadurch gekennzeichnet, daß** die Führung des ersten Werkstücks (20) bei der Bearbeitung durch eine Langdrehführungsbüchse (22) erfolgt.

29. Drehmaschine nach Anspruch 28, **dadurch gekennzeichnet, daß** die Langdrehführungsbüchse (22) in Richtung der ersten Spindelachse unverschiebbar relativ zum Maschinengestell (10) angeordnet ist.

## Claims

1. Lathe comprising
a machine frame (10),
a first working spindle (14) held on the machine frame (10) and rotatable about a first spindle axis (16), said working spindle having a first receiving means (18) for a first workpiece (20),
at least one first tool carrier (32, 34) movable in an X direction transversely to the first spindle axis (16) for the machining of the first workpiece (20),
a second working spindle (54) rotatable about a second spindle axis (56), said working spindle having a second workpiece receiving means (58) for a second workpiece (60) and in relation to the first working spindle (14) being adapted to be brought from a position coaxial to the first spindle axis (16) with the second spindle axis (56) into a non-coaxial position in a transverse direction (64) extending transversely to the X direction and transversely to the first spindle axis (16), the first and second spindle axes (16, 56) being arranged at a distance from one another in said non-coaxial position,
and a first tool carrier (92) on the front side for the machining of the first workpiece (20), said tool carrier being associated with a first working space (30) and being movable from an inactive into an active position and vice versa with at least one tool (94) as a result of a movement transversely to the X direction,
and a second tool carrier (72) on the front side for the machining of the second workpiece (60), said tool carrier being associated with a second working space (70) and arranged so as to be offset in the transverse direction (64) in relation to the first working space (30),
**characterized in that**
the first tool carrier (92) on the front side and the second working spindle (54) are movable relative to one another in the transverse direction (64) controlled by a machine control (110).

2. Lathe as defined in claim 1, **characterized in that** the first tool carrier (92) on the front side and the second working spindle (54) are each seated on a cross slide (62, 102) movable in the transverse direction (64).

3. Lathe as defined in claim 2, **characterized in that** the first tool carrier (92) on the front side is seated on the same console (80) as the second working spindle (54) with its cross slide (62, 102).

4. Lathe as defined in any one of the preceding claims, **characterized in that** the first tool carrier (92) on the front side and the second working spindle (54) are seated on a common slide (80) movable in X direction in relation to the machine frame (10).

5. Lathe as defined in any one of the preceding claims, **characterized in that** the second tool carrier (72) on the front side is movable transversely to the second spindle axis (56) and in a direction (X) extending transversely to the transverse direction (64).

6. Lathe as defined in claim 5, **characterized in that** the second tool carrier (72) on the front side is movable approximately in X direction.

7. Lathe as defined in claim 5 or 6, **characterized in that** the second tool carrier (72) on the front side is guided on the console (80) bearing the cross slide (62) for the second working spindle (54) so as to be movable.

8. Lathe as defined in any one of the preceding claims, **characterized in that** the second working spindle (54) is movable in the direction (Z) of the second spindle axis (56).

9. Lathe as defined in claim 8, **characterized in that** the second working spindle (54) is seated on a Z slide (66) arranged for its part on the cross slide (62).

10. Lathe as defined in any one of the preceding claims, **characterized in that** the second working spindle (54) is pivotable about a pivot axis (59) extending transversely to the second spindle axis (56).

11. Lathe as defined in claim 10, **characterized in that** the pivot axis (59) extends transversely to the X direction.

12. Lathe as defined in claim 11, **characterized in that** the pivot axis (59) extends approximately parallel to the transverse direction (64).

13. Lathe as defined in any one of the preceding claims, **characterized in that** the first tool carrier (92) on the front side is movable in a direction parallel (Z) to the first spindle axis (16).

14. Lathe as defined in claim 13, **characterized in that** the first tool carrier (92) on the front side and the second working spindle (54) are movable in the direction of the spindle axes (16, 56) independently of one another.

15. Lathe as defined in claim 14, **characterized in that** the first tool carrier (92) on the front side is seated on a Z slide (106) movable in Z direction, said Z slide being seated for its part on the cross slide (102).

16. Lathe as defined in any one of the preceding claims, **characterized in that** the first tool carrier (92) on the front side has a row (96) of tools (94) arranged so as to follow one another in a longitudinal direction (97).

17. Lathe as defined in claim 16, **characterized in that** the longitudinal direction (97) extends approximately parallel to the transverse direction (64).

18. Lathe as defined in any one of the preceding claims, **characterized in that** the first tool carrier (92') on the front side has at least two tools (94a, b) arranged around a pivot axis (98) in angular spaced relationship to one another, said tools being adapted to be brought into an active or inactive position due to pivoting of the tool carrier (92') about the pivot axis (98).

19. Lathe as defined in claim 18, **characterized in that** the pivot axis (98) extends approximately parallel to the transverse direction (64).

20. Lathe as defined in claim 18 or 19, **characterized in that** the pivot axis (98) is designed as a B axis adapted to be controlled by the machine control (110).

21. Lathe as defined in any one of the preceding claims, **characterized in that** the second tool carrier (72) on the front side has a row (76) of tools (74) arranged so as to follow one another in a longitudinal direction (77).

22. Lathe as defined in claim 21, **characterized in that** the longitudinal direction (77) extends approximately parallel to the direction of movement (X) of the second tool carrier (72) on the front side.

23. Lathe as defined in any one of the preceding claims, **characterized in that** the second tool carrier (72') on the front side has at least two tools (74) arranged about a pivot axis (78) in angular spaced relationship, said tools being movable from an active into an inactive position and vice versa due to pivoting of the second tool carrier (72) about the pivot axis (78).

24. Lathe as defined in claim 23, **characterized in that** the pivot axis (78) extends approximately parallel to the direction of movement of the second tool carrier (72') on the front side.

25. Lathe as defined in claim 23 or 24, **characterized in that** the pivot axis (78) is designed as a B axis adapted to be controlled by the machine control (110).

26. Lathe as defined in any one of claims 18 to 25, **characterized in that** the tools (74, 94) of the tool carrier (72, 92) on the front side are arranged relative to the pivot axis (78, 98) such that the force acting on the tools (74, 94) during machining is directed essentially in a radial direction in relation to the pivot axis (78, 98).

27. Lathe as defined in any one of the preceding claims, **characterized in that** the first working spindle (14) is guided on the machine frame for displacement in the direction of the first spindle axis (16).

28. Lathe as defined in any one of the preceding claims, **characterized in that** the guidance of the first workpiece (20) during the machining is brought about by a longitudinal turning guide bush (22).

29. Lathe as defined in claim 28, **characterized in that** the longitudinal turning guide bush (22) is arranged relative to the machine frame (10) so as to be non-displaceable in the direction of the first spindle axis.

## Revendications

1. Machine-outil comprenant :
■ un bâti de machine (10),
■ une première broche (14) fixée de manière rotative sur le bâti de machine (10) et tournant autour d'un premier axe de broche (16), et dotée d'un premier logement (18) pour une première pièce de travail (20),
■ au moins un premier support d'outils (32, 34), qui peut être déplacé pour façonner la première pièce de travail (20) dans une direction X transversale au premier axe de broche (16),
■ une deuxième broche (54) tournant autour d'un second axe de broche (56), laquelle deuxième broche (54) présente un second logement de pièce à travailler (58) pour une seconde pièce à travailler (60) et laquelle peut être amenée par rapport à la première broche (14), dans une direction transversale (64) s'étirant transversalement par rapport à la direction X et transversalement par rapport au premier axe de broche (16), d'une position coaxiale avec le second axe de broche (56) par rapport au premier axe de broche (16) dans une position non coaxiale, dans laquelle deuxième broche (54) les premier et second axes de broches (16, 56) sont agencées avec un certain écartement entre elles,
■ et un premier support d'outils de face avant (92) correspondant à une première zone de travail (30) afin de façonner la première pièce de travail (20), lequel support d'outils (92), peut être déplacé par un mouvement transversal par rapport à la direction X, comprenant au moins un outil (94) d'une position inactive à une position active et vice-versa,
■ et un deuxième support d'outils de face avant (72) correspondant à une seconde zone de travail (70) afin de façonner le second outil (60), qui est agencé de manière à être déplacé dans la direction transversale (64) par rapport à la première zone de travail (30),
**caractérisée en ce que** le premier support d'outils de face avant (92) et la seconde broche (54) peuvent être déplacés en étant commandés l'un par rapport à l'autre dans la direction transversale (64) par une commande de machine (110).

2. Machine-outil selon la revendication 1, **caractérisée en ce que** le premier support d'outils de face avant (92) et la seconde broche (54) sont chacun placés sur un coulisseau transversal (62, 102) pouvant être déplacé dans la direction transversale (64).

3. Machine-outil selon la revendication 2, **caractérisée en ce que** premier support d'outils de face avant (92) est placé sur la même console (80) que la seconde broche (54) avec son coulisseau transversal (62, 102).

4. Machine-outil selon l'une des revendications précédentes, **caractérisée en ce que** premier support d'outils de face avant (92) et la seconde broche (54) sont placés sur coulisseau (80) commun pouvant être déplacé dans la direction X par rapport au bâti de machine (10).

5. Machine-outil selon l'une des revendications précédentes, **caractérisée en ce que** le second support d'outils de face avant (72) peut être déplacé transversalement au second axe de broche (56) et dans une direction (X) s'étirant transversalement par rapport à la direction transversale (64).

6. Machine-outil selon la revendication 5, **caractérisée en ce que** le second support d'outil de face avant (72) peut être déplacé approximativement dans la direction X.

7. Machine-outil selon la revendication 5 ou 6, **caractérisée en ce que** le second support d'outil de face avant (72) est déplacé jusqu'à la console (80) portant le coulisseau transversal (62) pour la seconde broche (54).

8. Machine-outil selon l'une des revendications précédentes, **caractérisée en ce que** la seconde broche (54) peut être déplacée dans la direction (z) du second axe de broche (56).

9. Machine-outil selon la revendication 8, **caractérisée en ce que** la seconde broche (54) est placée sur un coulisseau en Z (66), lequel est quant à lui agencé sur le coulisseau transversal (62).

10. Machine-outil selon l'une des revendications précédentes, **caractérisée en ce que** la seconde broche (54) peut être pivotée par rapport à un axe de pivotement (59) s'étirant transversalement par rapport au second axe de broche (56).

11. Machine-outil selon la revendication 10, **caractérisée en ce que** l'axe de pivotement (59) s'étire transversalement à la direction X.

12. Machine-outil selon la revendication 11, **caractérisée en ce que** l'axe de pivotement (59) s'étire approximativement parallèlement à la direction transversale (64).

13. Machine-outil selon l'une des revendications précédentes, **caractérisée en ce que** le premier support d'outils de face avant (92) peut être déplacé dans une direction parallèle (Z) au premier axe de broche (16).

14. Machine-outil selon la revendication 13, **caractérisée en ce que** le premier support d'outils de face avant (92) et la seconde broche (54) peuvent être déplacés en direction des axes de broche (16, 56) indépendamment l'un de l'autre.

15. Machine-outil selon la revendication 14, **caractérisée en ce que** le premier support d'outil de face avant (92) est placé sur un coulisseau en Z (106) pouvant être déplacé dans la direction Z, lequel est quant à lui placé sur le coulisseau transversal (102).

16. Machine-outil selon l'une des revendications précédentes, **caractérisée en ce que** le premier support d'outils de face avant (92) présente une série (96) d'outils (94) agencés à la suite dans une direction longitudinale (97).

17. Machine-outil selon la revendication 16, **caractérisée en ce que** la direction longitudinale (97) s'étire approximativement parallèlement à la direction transversale (64).

18. Machine-outil selon l'une des revendications précédentes, **caractérisée en ce que** le premier support d'outils de face avant (92') présente au moins deux outils (94a, b) agencés avec un écart angulaire l'un par rapport à l'autre autour d'un axe de pivotement (98), lesquels peuvent être amenés par une rotation du support d'outils (92') autour de l'axe de pivotement (98) dans une position active ou inactive.

19. Machine-outil selon la revendication 18, **caractérisée en ce que** l'axe de pivotement (98) s'étire approximativement parallèlement à la direction transversale (64).

20. Machine-outil selon la revendication 18 ou 19, **caractérisée en ce que** l'axe de pivotement (98) est conçu comme un axe B pouvant être commandé par la commande de machine (110).

21. Machine-outil selon l'une des revendications précédentes, **caractérisée en ce que** le second support d'outils de face avant (72) présente une série (76) d'outils (74) agencés à la suite dans une direction longitudinale (77).

22. Machine-outil selon la revendication 21, **caractérisée en ce que** la direction longitudinale (77) s'étire approximativement parallèlement à la direction de déplacement (X) du second support d'outils de face avant (72).

23. Machine-outil selon l'une des revendications précédentes, **caractérisée en ce que** le second support d'outils de face avant (72') présente au moins deux outils (74) agencés avec un écart angulaire l'un par rapport à l'autre autour d'un axe de pivotement (78), lesquels peuvent être amenés par une rotation du second support d'outils (72) autour de l'axe de pivotement (78) d'une position active à une position inactive, et vis et versa.

24. Machine-outil selon la revendication 23, **caractérisée en ce que** l'axe de pivotement (78) s'étire approximativement parallèlement à la direction de déplacement du second support d'outils de face avant (72').

25. Machine-outil selon la revendication 23 ou 24, **caractérisée en ce que** l'axe de pivotement (78) est conçu comme un axe B pouvant être commandé par la commande de machine (110).

26. Machine-outil selon l'une des revendications 18 à 25, **caractérisée en ce que** les outils (74, 94) du support d'outils de face avant (72, 92) sont agencés relativement à l'axe de pivotement (78, 98) de manière à ce que la force agissant sur les outils (74, 94) lors de l'usinage soit sensiblement orientée en direction radiale par rapport à l'axe de pivotement (78, 98).

27. Machine-outil selon l'une des revendications précédentes, **caractérisée en ce que** la première broche (14) est guidée de manière à être déplacée sur le bâti d'outil en direction du premier axe de broche (16).

28. Machine-outil selon l'une des revendications précédentes, **caractérisée en ce que** le guidage de la première pièce de travail 1 (20) lors du façonnage a lieu avec un guide de tournage longitudinal (22).

29. Machine-outil selon la revendication 28, **caractérisée en ce que** le guide de tournage longitudinal (22) dans la direction du premier axe de broche est agencé de manière fixe par rapport au bâti de machine (10),
